# EUROPEAN PATENT APPLICATION

(11) **EP 4 542 679 A2**
(43) Date of publication of application: **23.04.2025**
(21) Application number: 24207185.0
(22) Date of filing: 17.10.2024
(51) Int. Cl.: H01M 4/36, H01M 4/62

(54) **ANODE AND LITHIUM BATTERY INCLUDING THE SAME**

(30) Priority: 19.10.2023 KR 20230140620
(71) Applicant: SAMSUNG SDI CO., LTD., Yongin-si, Gyeonggi-do 17084 (KR)
(72) Inventor: Lee, Kanghee, Yongin-si 17084 (KR); Kwak, Byeongdo, Yongin-si 17084 (KR); Woo, Hyunsik, Yongin-si 17084 (KR); Jung, Kyunghwa, Yongin-si 17084 (KR); Moon, Jongseok, Yongin-si 17084 (KR); Bae, Woojin, Yongin-si 17084 (KR); Kim, Heemin, Yongin-si 17084 (KR); Park, Jongseok, Yongin-si 17084 (KR); Shin, Juhun, Yongin-si 17084 (KR); Hong, Donggi, Yongin-si 17084 (KR); Pyo, Sujin, Yongin-si 17084 (KR); Park, Jinhwan, Yongin-si 17084 (KR)
(74) Representative: Michalski Hüttermann & Partner Patentanwälte mbB

(57) **Abstract**

An anode and a lithium battery including the same, wherein the anode includes an anode current collector, an electrodeposition induction layer on the anode current collector and including a first carbon-based material, and a protective layer on the electrodeposition induction layer, wherein the first carbon-based material is a nitrogen-containing amorphous carbon compound, and a content of the nitrogen element is more than or equal to about 1 wt% with respect to the total weight of the electrodeposition induction layer.

## Description

### CROSS-REFERENCE TO RELATED APPLICATION

The present application claims priority to and the benefit of Korean Patent Application No. 10-2023 -0140620, filed on October 19, 2023, in the Korean Intellectual Property Office, the entire content of which is incorporated herein by reference.

### BACKGROUND

### 1. Field

Embodiments of the present disclosure described herein are related to an anode and a lithium battery including the same.

### 2. Description of the Related Art

Currently commercially available lithium batteries mainly utilize carbon-based anode active materials such as graphite. There is no change or no substantial change in volume of carbon-based anode active materials during charging/discharging, which ensure the high stability of lithium batteries. However, graphite has a relatively low theoretical electric capacity of about 372 mAh/g.

Lithium metals may be utilized as anode active materials. Lithium metals have a relatively high theoretical electric capacity of about 3,860 mAh/g. Due to a side reaction between a lithium metal and an electrolyte during charging/discharging, dendrites may be formed on a surface of the lithium metal and grown to cause a short circuit between a cathode and an anode. In some embodiments, the lifespan characteristics of lithium batteries including lithium metals deteriorate.

As such, there is a need for a method of improving life characteristics of a lithium battery including a lithium metal.

### SUMMARY

Aspects according to one or more embodiments are directed toward an anode having a novel structure.

Aspects according to one or more embodiments are directed toward a lithium battery including the anode having the novel structure.

Additional aspects will be set forth in part in the description which follows and, in part, will be apparent from the description, or may be learned by practice of the presented embodiments of the present disclosure.

According to one or more embodiments, an anode includes an anode current collector, an electrodeposition induction layer disposed on the anode current collector and including a first carbon-based material, and a protective layer disposed on the electrodeposition induction layer, wherein the first carbon-based material is a nitrogen-containing amorphous carbon compound, and a content (e.g., amount) of the nitrogen element is more than or equal to about 1 wt% with respect to the total weight of the electrodeposition induction layer.

According to one or more embodiments, a lithium battery includes a cathode, the anode, and an electrolyte disposed between the cathode and the anode.

### BRIEF DESCRIPTION OF THE DRAWINGS

The accompanying drawing is included to provide a further understanding of the present disclosure, and is incorporated in and constitutes a part of this specification. The drawing illustrates example embodiments of the present disclosure and, together with the description, serve to explain principles of present disclosure. The above and other aspects, features, and advantages of certain embodiments of the present disclosure will be more apparent from the following description taken in conjunction with the accompanying drawings, in which:
FIG. 1 is a cross-sectional view of an anode before charging according to embodiments;
FIG. 2 is a cross-sectional view of an anode after charging according to embodiments;
FIG. 3 is a schematic view of a lithium metal battery according to embodiments;
FIG. 4 is a schematic view of a lithium metal battery according to embodiments;
FIG. 5 is a schematic view of a lithium metal battery according to embodiments;
FIG. 6 is a cross-sectional view of a lithium battery according to other embodiments;
FIG. 7 is a cross-sectional view of a lithium battery according to other embodiments;
FIG. 8A is a scanning electron microscopy (SEM) image of an anode after a lithium electrodeposition layer is formed on an electrodeposition induction layer according to Example 1;
FIG. 8B is a SEM image of an anode after a lithium electrodeposition layer is formed on an electrodeposition induction layer according to Example 2;
FIG. 9A is a SEM image of an anode after a lithium electrodeposition layer is formed on an electrodeposition induction layer according to Comparative Example 1; and
FIG. 9B is a SEM image of an anode after a lithium electrodeposition layer is formed on an electrodeposition induction layer according to Comparative Example 2.

### DETAILED DESCRIPTION

Reference will now be made in more detail to embodiments, examples of which are illustrated in the accompanying drawings, wherein like reference numerals refer to like elements throughout, and duplicative descriptions thereof may not be provided. In this regard, the present embodiments may have different forms and should not be construed as being limited to the descriptions set forth herein. In some embodiments, the embodiments are merely described herein, by referring to the drawings, to explain aspects of the present description. As utilized herein, the term "and/or" includes any and all combinations of one or more of the associated listed items. As used herein, expressions such as "at least one of', "one of', and "selected from", when preceding a list of elements, modify the entire list of elements and do not modify the individual elements of the list. For example, "at least one of a, b or c", "at least one selected from a, b and c", etc., may indicate only a, only b, only c, both (e.g., simultaneously) a and b, both (e.g., simultaneously) a and c, both (e.g., simultaneously) b and c, all of a, b, and c, or variations thereof.

During a charging/discharging process of an anode-free lithium metal battery which is a lithium battery and is free of an anode active material layer, a lithium-containing lithium electrodeposition layer may be electroodeposed and dissolved between an anode current collector and an electrolyte layer. As charging/discharging of the anode-free lithium metal battery is repeated, the lithium electrodeposition layer may include impurities remaining in an electrode, decomposition products of an electrolyte, and/or the like. In some embodiments, the lithium electrodeposition layer may include such impurities, and thus a surface of the lithium electrodeposition layer may become rough and hard. Lithium dendrites are electrodeposited on the lithium electrodeposition layer having such a rough surface. Such lithium dendrites may continue to grow during a charging/discharging process and may cause a short circuit between a cathode and an anode.

An anode according to an aspect may have a novel structure so that lithium may be uniformly electrodeposited and the density of a lithium electrodeposition layer may be increased. In other embodiments, in the anode according to an aspect, the formation of lithium dendrites may be suppressed or reduced, and the occurrence of a short circuit in a lithium battery adopting the anode may be suppressed or reduced, thereby improving cycle characteristics.

Hereinafter, as the present disclosure allows for one or more suitable changes and numerous embodiments, specific embodiments will be illustrated in the drawings and described in more detail in the written description. However, this is not intended to limit the present disclosure to particular modes of practice, and it is to be appreciated that all changes, equivalents, and substitutes that do not depart from the spirit and technical scope are encompassed in the present disclosure.

The terms utilized herein are merely utilized to describe specific embodiments and are not intended to limit the present disclosure. An expression utilized in the singular encompasses the expression of the plural, unless it has a clearly different meaning in the context. As utilized herein, it is to be understood that the terms such as "including," "having," and "comprising" are intended to indicate the existence of the features, numbers, steps, actions, components, parts, ingredients, materials, or combinations thereof disclosed in the specification and are not intended to preclude the possibility that one or more other features, numbers, steps, actions, components, parts, ingredients, materials, or combinations thereof may exist or may be added. The symbol "/" utilized herein may be interpreted as "and" or "or" according to the context.

In the drawings, the thicknesses of layers and regions are exaggerated or reduced for clarity. Like reference numerals in the drawings denote like elements throughout, and duplicative descriptions thereof may not be provided the specification. Throughout the specification, it will be understood that when a component, such as a layer, a film, a region, or a plate, is referred to as being "on" another component, the component may be directly on the other component or intervening components may be present thereon. Throughout the specification, while such terms as "first," "second," and/or the like may be utilized to describe one or more suitable components, such components should not be limited to the above terms. The above terms are utilized only to distinguish one component from another. Components having substantially the same functional configuration in the present specification and drawings are denoted by the same reference numerals, and redundant descriptions thereof will not be provided.

As utilized herein, the term "particle diameter" of particles refers to an average diameter when particles are spherical and refers to an average major axis length when particles are non-spherical. A particle diameter of particles may be measured by utilizing a particle size analyzer (PSA). A "particle diameter" of particles is, for example, an "average particle diameter." An average particle diameter refers to, for example, a median particle diameter (D50). The median particle diameter (D50) is a particle size corresponding to a 50 % cumulative volume if (e.g., when) a particle size distribution measured through a laser diffraction method is calculated from particles having a smaller particle size.

The term "metal" as utilized herein includes all of metals and metalloids such as silicon and germanium in an elemental or ionic state.

The term "alloy" as utilized herein refers to a mixture of two or more metals.

The term "cathode active material" as utilized herein refers to a cathode material that may undergo lithiation and delithiation.

The term "anode active material" as utilized herein refers to an anode material that may undergo lithiation and delithiation.

The terms "lithiate" and "lithiating" as utilized herein refer to a process of adding lithium to a cathode active material or an anode active material.

The terms "delithiate" and "delithiating" as utilized herein refer to a process of removing lithium from a cathode active material or an anode active material.

The terms "charge" and "charging" as utilized herein refer to a process of providing electrochemical energy to a battery.

The terms "discharge" and "discharging" as utilized herein refer to a process of removing electrochemical energy from a battery.

The terms "positive electrode" and "cathode" as utilized herein refer to an electrode at which electrochemical reduction and lithiation occur during a discharging process.

The terms "negative electrode" and "anode" as utilized herein refer to an electrode at which electrochemical oxidation and delithiation occur during a discharging process.

As utilized herein, the term "substantially" and similar terms are utilized as terms of approximation and not as terms of degree, and are intended to account for the inherent deviations in measured or calculated values that would be recognized by those of ordinary skill in the art. Also, the term "about" and similar terms, when utilized herein in connection with a numerical value or a numerical range, are inclusive of the stated value and a value within an acceptable range of deviation for the particular value as determined by one of ordinary skill in the art, considering the measurement in question and the error associated with measurement of the particular quantity (e.g., the limitations of the measurement system). For example, "about" may refer to within one or more standard deviations, or within ± 30%, 20%, 10%, 5% of the stated value.

Also, any numerical range recited herein is intended to include all subranges of the same numerical precision subsumed within the recited range. For example, a range of "1.0 to 10.0" is intended to include all subranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein and any minimum numerical limitation recited in this specification is intended to include all higher numerical limitations subsumed therein. Accordingly, Applicant reserves the right to amend this specification, including the claims, to expressly recite any sub-range subsumed within the ranges expressly recited herein.

Although specific embodiments have been described, alternatives, modifications, variations, improvements, and substantial equivalents not currently contemplated or foreseen may occur to applicants or those skilled in the art. Accordingly, the appended claims, as filed and as modified, are intended to cover all such alternatives, modifications, variations, improvements and substantial equivalents.

Hereinafter, an anode and a lithium battery including the same according to embodiments will be described in more detail.

### Anode

An anode according to embodiments may include an anode current collector, an electrodeposition induction layer disposed on the anode current collector and including a first carbon-based material, and a protective layer disposed on the electrodeposition induction layer, wherein the first carbon-based material may bea nitrogen-containing amorphous carbon compound, and a content (e.g., amount) of the nitrogen element may be more than or equal to about 1 wt% with respect to the total weight of the electrodeposition induction layer. For example, the content (e.g., amount) of the nitrogen element with respect to the total weight of the first carbon-based material may be more than or equal to about 10 wt%. For example, in the electrodeposition induction layer that includes the first carbon-based material including the nitrogen element, lithium ions may be uniformly electrodeposited between the electrodeposition induction layer and the protective layer. For example, in the electrodeposition induction layer that includes the first carbon-based material including the nitrogen element, lithium ions may preferentially bind to the nitrogen element to be electrodeposited on a surface of the first carbon-based material and uniformly electrodeposited on the electrodeposition induction layer.

In other embodiments, lithium ions may uniformly pass through the protective layer, and as the passed lithium ions are uniformly electrodeposited on the electrodeposition induction layer, the electrodeposition density of a lithium electrodeposition layer electrodeposited between the electrodeposition induction layer and the protective layer may be improved. In some embodiments, the energy density of a lithium battery including the anode may be improved.

The first carbon-based material including the nitrogen element may uniformly precipitate lithium ions on a surface of the electrodeposition induction layer, and the protective layer allows lithium ions to uniformly pass therethrough, thereby effectively preventing or reducing the generation and/or growth of lithium dendrites. The stability of the anode including the protective layer and the electrodeposition induction layer that includes the first carbon-based material including the nitrogen element, and a lithium battery adopting the same may be improved, and the cycle characteristics of the lithium battery may be improved.

In other embodiments, in an electrodeposition induction layer including a first carbon-based material which does not include a nitrogen element or in which a content (e.g., amount) of the nitrogen element is about 10 wt% or less with respect to the total weight of the first carbon-based material, the content (e.g., amount) of the nitrogen element included in the electrodeposition induction layer may be about 1 wt% or less, and thus lithium ions may not be uniformly electrodeposited. In some embodiments, the density of a lithium electrodeposition layer formed on the electrodeposition induction layer may be reduced, which may reduce the energy density of an anode, which includes the electrodeposition induction layer that includes the first carbon-based material including the nitrogen element, and a lithium battery adopting the same. In other embodiments, in an electrodeposition induction layer including a first carbon-based material which does not include a nitrogen element or has a low content (e.g., amount) of the nitrogen element, lithium ions may not uniformly electrodeposited on the electrodeposition induction layer, and thus it may be difficult to effectively suppress or reduce the generation and/or growth of lithium dendrites on a surface of the electrodeposition induction layer. The stability of an anode and a lithium battery which includes the electrodeposition induction layer including the first carbon-based material which does not include the nitrogen element or has a low content (e.g., amount) of the nitrogen element may be reduced, and the cycle characteristics of the lithium battery may be reduced.

In other embodiments, in an anode that does not include a protective layer, an electrodeposition density of a lithium electrodeposition layer formed between the electrodeposition induction layer and the protective layer may be reduced, which may reduce the energy density of a lithium battery including the anode.

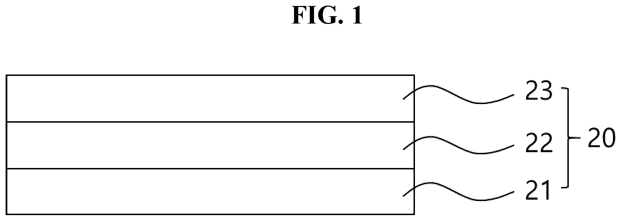

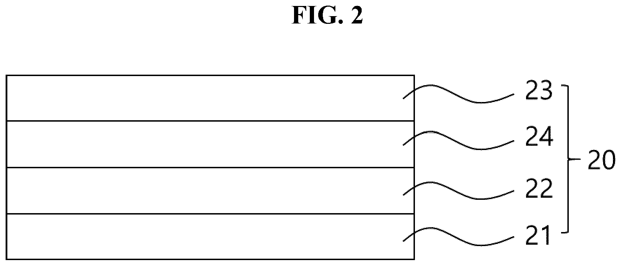

FIG. 1 is a cross-sectional view of an anode 20 before charging according to embodiments. FIG. 2 is a cross-sectional view of an anode 20 after charging according to embodiments.

Referring to FIG. 1, the anode 20 before charging may include an anode current collector 21, an electrodeposition induction layer 22 disposed on the anode current collector 21 and including a first carbon-based material, and a protective layer 23 disposed on the electrodeposition induction layer 22, wherein the first carbon-based material is a nitrogen-containing amorphous carbon compound, and a content (e.g., amount) of the nitrogen element is more than about 1 wt% with respect to the total weight of the electrodeposition induction layer.

Referring to FIG. 2, the anode 20 after charging may include an anode current collector 21, an electrodeposition induction layer 22 disposed on the anode current collector 21 and including a first carbon-based material, a protective layer 23 disposed on the electrodeposition induction layer 22, and a lithium electrodeposition layer 24 disposed between the electrodeposition induction layer 22 and the protective layer 23, wherein the first carbon-based material is a nitrogen-containing amorphous-carbon compound, and a content (e.g., amount) of the nitrogen element is more than or equal to about 1 wt% with respect to the total weight of the electrodeposition induction layer.

### Anode: Anode current collector

Referring to FIGS. 1 and 2, the anode 20 may include the anode current collector 21.

Any material, which does not react with lithium, for example, any material, which does not form an alloy or compound together with lithium and has conductivity (e.g., is a conductor), may be utilized as the material constituting the anode current collector 21. The anode current collector 21 may include, for example, a metal or alloy. The anode current collector 21 may be include (e.g., consist of), for example, indium (In), copper (Cu), magnesium (Mg), stainless steel (SUS), titanium (Ti), iron (Fe), cobalt (Co), nickel (Ni), zinc (Zn), aluminum (Al), germanium (Ge), lithium (Li), or an alloy thereof.

The anode current collector 21 may include, for example, a first metal substrate. The first metal substrate may include a first metal as a main component or may include (e.g., consist of) the first metal. The first metal substrate may include the first metal as a main component or may include (e.g., consist of) the first metal. A content (e.g., amount) of the first metal included in the first metal substrate may be, for example, about 90 wt% or more, about 95 wt% or more, about 99 wt% or more, or about 99.9 wt% or more with respect to the total weight of the first metal substrate. The first metal substrate may include (e.g., consist of), for example, a material that does not react with lithium, for example, a material that does not form an alloy and/or compound together with lithium.

Examples of the first metal may include copper (Cu), nickel (Ni), stainless steel (SUS), iron (Fe), and cobalt (Co), but one or more embodiments are not necessarily limited thereto. Any material utilized in the art may be utilized as a current collector in one or more embodiments of the present disclosure . The first metal substrate may include (e.g., consist of), for example, one of the above-described metals or an alloy of two or more metals. The first metal substrate may be, for example, in the form of a sheet or foil (e.g., may include sheet or foil). A thickness of the anode current collector 21 may be, for example, in a range of about 5 µm to about 50 µm, about 10 µm to about 50 µm, about 10 µm to about 40 µm, or about 10 µm to about 30 µm, but is not necessarily limited to such a range. The thickness of the anode current collector 21 may be selected according to the required characteristics of a lithium battery.

The anode current collector 21 may further include a coating layer, which includes a second metal, on the first metal substrate.

The anode current collector 21 may include, for example, the first metal substrate, and the coating layer disposed on the first metal substrate and including the second metal. The second metal has a higher Mohs hardness than the first metal. For example, the coating layer including the second metal may be harder than a substrate including the first metal, and thus the deterioration of the first metal substrate may be prevented or reduced. A material constituting the first metal substrate may have, for example, a Mohs hardness of about 5.5 or less. The first metal may have, for example, a Mohs hardness of about 5.5 or less, about 5.0 or less, about 4.5 or less, about 4.0 or less, about 3.5 or less, or about 3.0 or less. The first metal may have, for example, a Mohs hardness of about 2.0 to about 6.0. The coating layer may include the second metal. The coating layer may include, for example, the second metal as a main component or may include (e.g., consist of) the second metal. A content (e.g., amount) of the second metal included in the coating layer may be, for example, about 90 wt% or more, about 95 wt% or more, about 99 wt% or more, or about 99.9 wt% or more with respect to the total weight of the coating layer. The coating layer may include (e.g., consist of), for example, a material that does not react with lithium, for example, a material that does not form an alloy and/or compound together with lithium. A material constituting the coating layer may have, for example, a Mohs hardness of about 6.0 or more. For example, the second metal may have a Mohs hardness of about 6.0 or more, about 6.5 or more, about 7.0 or more, about 7.5 or more, about 8.0 or more, about 8.5 or more, or about 9.0 or more. The second metal may have, for example, a Mohs hardness of about 6.0 to about 12. If (e.g., when) the Mohs hardness of the second metal is excessively low, it may be difficult to suppress or reduce the deterioration of the anode current collector 21. If (e.g., when) the Mohs hardness of the second metal is excessively high, processing may not be easy. The second metal may include, for example, at least one selected from among titanium (Ti), manganese (Mn), niobium (Nb), tantalum (Ta), iridium (Ir), vanadium (V), rhenium (Re), osmium (Os), tungsten (W), chromium (Cr), boron (B), ruthenium (Ru), and rhodium (Rh). The coating layer may include (e.g., consist of), for example, one of the above-described metals or an alloy of two or more metals. A difference in Mohs hardness between the first metal included in the first metal substrate and the second metal included in the coating layer may be, for example, about 2 or more, about 2.5 or more, about 3 or more, about 3.5 or more, or about 4 or more. The first metal and the second metal may have such a difference in Mohs hardness, and thus the deterioration of the anode current collector 21 may be more effectively suppressed or reduced. The coating layer may have a single-layer structure or a multi-layer structure including two or more layers. The coating layer may have, for example, a two-layer structure including a first coating layer and a second coating layer. The coating layer may have, for example, a three-layer structure including a first coating layer, a second coating layer, and a third coating layer. A thickness of the coating layer may be, for example, in a range of about 10 nm to about 1 µm, about 50 nm to about 500 nm, about 50 nm to about 200 nm, or about 50 m to about 150 nm. If (e.g., when) the coating layer is excessively thin, it may be difficult to suppress or protect from the substantially non-uniform growth of a lithium-containing metal layer. As the thickness of the coating layer increases, the cycle characteristics of a lithium battery may be improved. However, if (e.g., when) the coating layer is excessively thick, the energy density of the lithium battery may decrease, and it may not be easy to form the coating layer. The coating layer may be disposed on the first metal substrate through, for example, vacuum deposition, sputtering, plating, and/or the like, but one or more embodiments are not necessarily limited to such a method. Any method capable of providing a coating layer in the art may be utilized.

For example, the anode current collector 21 may have a reduced thickness as compared with an anode current collector included in an anode according to a related art. In some embodiments, the anode 20 according to the present disclosure may include, for example, a thin film current collector and thus may be distinguished from an electrode of a related art including a thick film current collector. An electrode according to embodiments may adopt a thin film current collector having a reduced thickness, and thus, in an anode including the thin film current collector, a thickness of a lithium electrodeposition layer may relatively increase. In some embodiments, the energy density of a lithium battery adopting such an electrode may increase. A thickness of the anode current collector 21 may be, for example, less than about 15 µm, about 14.5 µm or less, or about 14 µm or less. The thickness of the anode current collector 21 may be, for example, in a range of about 0.1 µm to less than or equal to about 15 µm, about 1 µm to about 14.5 µm, about 2 µm to about 14 µm, about 3 µm to about 14 µm, about 5 µm to about 14 µm, or about 10 µm to about 14 µm.

The anode current collector 21 may have a form of one selected from among, for example, a sheet, foil, a film, a plate, a porous body, a mesoporous body, a through-hole-containing body, a polygonal ring body, a mesh body, a foam body, and a nonwoven body, but one or more embodiments are not necessarily limited to the form. Any form utilized in the art may be utilized for the anode current collector 21.

The anode current collector 21 may include, for example, a base film and a metal substrate layer disposed on one surface or two surfaces of the base film. The anode current collector 21 may include a substrate, and the substrate may have a structure including, for example, a base film and a metal substrate layer disposed on at least one side (e.g., one or both (e.g., opposite) sides) of the base film. An interlayer layer may be additionally disposed on the metal substrate layer.

For example, the base film may include, for example, a polymer. The polymer may be, for example, a thermoplastic polymer. The polymer may include, for example, polyethylene terephthalate (PET), polyethylene (PE), polypropylene (PP), polybutylene terephthalate (PBT), polyimide (PI), or a combination thereof. The base film may include the thermoplastic polymer, and thus during a short circuit, the base film may be melted to suppress or reduce a rapid increase in current. The base film may be, for example, an insulator. The metal substrate layer may include, for example, copper (Cu), stainless steel, titanium (Ti), iron (Fe), cobalt (Co), nickel (Ni), or an alloy thereof. The metal substrate layer may serve as an electrochemical fuse and may be cut if (e.g., when) an overcurrent occurs, thereby performing a short circuit prevention function. A thickness of the metal substrate layer may be adjusted to adjust a limit current and a maximum current. The metal substrate layer may be electrodeposited or deposited on the base film. If (e.g., when) the thickness of the metal substrate decrease, a limit current and/or a maximum current of the anode current collector 21 decrease, and thus the stability of a lithium metal battery during a short circuit may be improved. A lead tab may be added onto the metal substrate layer for external connection. The lead tab may be welded to the metal substrate layer or a metal substrate layer/base film stack through ultrasonic welding, laser welding, spot welding, and/or the like. While the base film and/or the metal substrate layer are melted during welding, the metal substrate layer may be electrically connected to the lead tab. In order to more strongly weld the metal substrate layer and the lead tab, a metal chip may be added between the metal substrate layer and the lead tab. The metal chip may be a flake consisting of the same material as a metal of the metal substrate layer. The metal chip may be, for example, metal foil or a metal mesh. The metal chip may be, for example, aluminum foil, copper foil, or SUS foil. The metal chip may be disposed on the metal substrate layer and then welded to the lead tab, and thus the lead tab may be welded to a metal chip/metal substrate layer stack or a metal chip/metal substrate layer/base film stack. During welding, while the base film, the metal layer, and/or the metal chip are melted, the metal layer or a metal layer/metal chip stack may be electrically connected to the lead tab. A metal chip and/or a lead tab may be added onto a portion of the metal substrate layer. A thickness of the base film may be, for example, in a range of about 1 µm to µm 50 µm, about 1.5 µm to about 50 µm, about 1.5 µm to about 40 µm, or about 1 µm to about 30 µm. The base film may have a thickness in such a range, and thus a weight of an anode assembly may be more effectively reduced. A melting point of the base film may be, for example, in a range of about 100 °C to about 300 °C, about 100 °C to about 250 °C, or about 100 °C to about 200 °C. The base film may have a melting point in such a range, and thus the base film may be melted and easily coupled to the lead tab in a process of welding the lead tab. In order to improve an adhesive force between the base film and the metal substrate layer, surface treatment such as corona treatment may be performed on the base film. The thickness of the metal substrate layer may be, for example, in a range of about 0.01 µm to about 3 µm, about 0.1 µm to about 3 µm, about 0.1 µm to about 2 µm, or about 0.1 µm to about 1 µm. The metal substrate layer may have a thickness in such a range, and thus the stability of the anode 20 may be secured while conductivity is maintained. A thickness of the metal chip may be, for example, in a range of about 2 µm to about 10 µm, about 2 µm to about 7 µm, or about 4 µm to about 6 µm. The metal chip may have a thickness in such a range, and thus the metal layer and the lead tab may be more easily connected. The anode current collector 21 may have such a structure, and thus the weight of an electrode may be reduced, thereby improving an energy density.

### Anode: Electrodeposition induction layer

Referring to FIGS. 1 and 2, the anode 20 may include the anode current collector 21, and the electrodeposition induction layer 22 disposed on the anode current collector 21. The electrodeposition induction layer 22 may include the first carbon-based material. The first carbon-based material may be a nitrogen-containing amorphous carbon compound, and the content (e.g., amount) of the nitrogen element may be more than or equal to about 1wt% with respect to the total weight of the electrodeposition induction layer 22. The electrodeposition induction layer 22 may include the first carbon-based material including the nitrogen element, and thus a lithium metal may be more uniformly electrodeposition on the electrodeposition induction layer 22. For example, the content (e.g., amount) of the nitrogen element may satisfy a content (e.g., amount) that is more than or equal to about 1 wt% with respect to the total weight of the electrodeposition induction layer 22 so that the density of the lithium electrodeposition layer 24 formed on the electrodeposition induction layer 22 may be increased and the formation and/or growth of lithium dendrites and/or may be effectively prevented or reduced.

According to embodiments, the content (e.g., amount) of the nitrogen element may be about 1.1 wt% or more, about 1.2 wt% or more, or in a range of about 1.1 wt% to about 10 wt% or about 1.2 wt% to about 10 wt% with respect to the total weight of the electrodeposition induction layer 22.

According to embodiments, the content (e.g., amount) of nitrogen element in the first carbon-based material may be more than or equal to about 10 wt%, about 11 wt% or more, or about 12 wt% or more with respect to the total weight of the first carbon-based material. If (e.g., when) the content (e.g., amount) of the nitrogen element in the first carbon-based material satisfies such a range, the content (e.g., amount) of the nitrogen element in the electrodeposition induction layer 22 may more easily satisfy a content (e.g., amount) that is more than or equal to about 1 wt%.

According to embodiments, the first carbon-based material may be a nitrogen-containingcarbonized polymer. For example, the first carbon-based material may be prepared by carbonizing a nitrogen-containing polymer at a temperature of about 800 °C or more. For example, the nitrogen-containing polymer may be carbonized at a temperature of about 800 °C or more in a nitrogen atmosphere for about 3 hours or more.

According to embodiments, the polymer including the nitrogen element may include sulfurized polyacrylonitrile (SPAN). For example, the SPAN may have improved structural stability by including a three-dimensionally cross-linked condensed ring. For example, the SPAN may include a plurality of nitrogen (N) elements derived from a nitrile group included in the three-dimensionally cross-linked condensed ring. The nitrogen element included in the SPAN is included in the condensed ring, even if (e.g., when) the SPAN is carbonized at a temperature of about 800 °C or more, the nitrogen element may remain in the carbonized polymer, and thus the first carbon-based material, in which the content (e.g., amount) of the nitrogen element in the first carbon-based material is more than or equal to about 10 wt% with respect to the total weight of the first carbon-based material, may be more easily prepared. In the electrodeposition induction layer 22 including the first carbon-based material in which the content (e.g., amount) of the nitrogen element in the first carbon-based material is more than or equal to about 10 wt% with respect to the total weight of the first carbon-based material, the content (e.g., amount) of the nitrogen element may easily exceed about 1 wt%. For example, due to the content (e.g., amount) of the nitrogen element, the nitrogen element included in the first carbon-based material may react with lithium ions during a charging/discharging process to form lithium nitride such as Li₃N, and such lithium nitride may uniformly precipitate lithium ions on the electrodeposition induction layer 22.

For example, the SPAN may be prepared by heating raw material powders including a sulfur powder and a polyacrylonitrile (PAN) powder in a closed non-oxidizing atmosphere. If (e.g., when) the sulfur powder and the PAN powder are heated, a ring closure reaction in which PAN is three-dimensionally cross-linked to form a fused ring such as a 6-membered ring and a reaction between sulfur and PAN may proceed concurrently (e.g., simultaneously), and thus the SPAN in which sulfur is bonded to the condensed ring may be obtained. In some embodiments, the condensed ring may include a nitrogen element. In some embodiments, in preparing the first carbon-based material by carbonizing the polymer including the SPAN, the nitrogen element included in the condensed ring of the SPAN may remain without being decomposed during a carbonization process, and thus the content (e.g., amount) of the nitrogen element included in the first carbon-based material may easily satisfy a content (e.g., amount) that is more than or equal to about 10 wt%. In the electrodeposition induction layer 22 which includes the first carbon-based material including the nitrogen element, the content (e.g., amount) of the nitrogen element included in the electrodeposition induction layer may more easily satisfy a content (e.g., amount) that is more than or equal to about 1 wt%, and thus the lithium element may be uniformly electrodepositated on the electrodeposition induction layer.

According to embodiments, the first carbon-based material may be amorphous carbon further including a sulfur element. For example, the first carbon-based material may be a nitrgrogen and sulfur containing amorphous carbon compound. For example, if (e.g., when) the first carbon-based material further includes sulfur, the nitrogen element may more easily remain during a process of preparing the first carbon-based material.

For example, the first carbon-based material may be a nitrogen- and sulfur-containing carbonized polymer. For example, the nitrogen- and sulfur-containing polymer may be carbonized at a temperature of about 800 °C or more in a nitrogen atmosphere for about 3 hours or more.

According to embodiments, the polymer including the nitrogen element and the sulfur element may include SPAN. For example, the SPAN may include a condensed ring in which a plurality of sulfur elements are consecutively bonded. For example, the SPAN may include a condensed ring formed by consecutively bonding three or more sulfur elements. For example, the condensed ring in which the sulfur elements are consecutively bonded may include a nitrogen element. In some embodiments, the polymer including the SPAN may include a large amount of nitrogen elements included in the condensed ring, and thus the nitrogen element may remain without being decomposed during a process of carbonizing the polymer, thereby increasing the content (e.g., amount) of the nitrogen element in the first carbon-based material. In other embodiments, during a carbonization process, the sulfur element included in the polymer may be decomposed and removed, and thus a ratio of the nitrogen element in the polymer may be further increased.

According to embodiments, a content (e.g., amount) of the sulfur element in the first carbon-based material may be in a range of about 0.1 wt% to about 50 wt%.

According to embodiments, if (e.g., when) the first carbon-based material includes a sulfur element, the electrodeposition induction layer 22 including the first carbon-based material may further include Li₂S. For example, Li₂S may have an ionic conductivity of about 1×10⁻⁵ S/cm or more and thus may impart additional ionic conductivity to the electrodeposition induction layer 22. Li₂S may be derived from the sulfur element included in the first carbon-based material. Li₂S may be generated, for example, by a reaction between a lithium ion and the sulfur element and included in the first carbon-based material during charging of a lithium battery. The electrodeposition induction layer 22 may additionally include Li₂S, and thus the ionic conductivity of the electrodeposition induction layer 22 may increase.

According to embodiments, an intensity ratio (Id/Ig) of a D peak to a G peak obtained by a Raman analysis spectrum of the first carbon-based material may be in a range of about 0.8 to about 1.5. From the Raman analysis spectrum, it may be confirmed that the first carbon-based material is the amorphous carbon from a value range of the intensity ratio (Id/Ig) of the D peak to the G peak.

According to embodiments, the first carbon-based material may be, for example, in a form of particles. An average particle diameter of the particles of the first carbon-based material may be, for example, in a range of about 50 nm to about 10 µm or about 500 nm to about 10 µm. The first carbon-based material may have an average particle diameter in such a range, lithium ions may be more uniformly electrodeposited on the electrodeposition induction layer.

A content (e.g., amount) of the first carbon-based material may be, for example, in a range of about 1 wt% to about 99 wt%, about 10 wt% to about 90 wt%, about 20 wt% to about 80 wt%, about 20 wt% to about 50 wt%, or about 30 wt% to about 50 wt% with respect to the total weight of the electrodeposition induction layer 22. The electrodeposition induction layer 22 may include the first carbon-based material in such a range, the cycle characteristics of a lithium battery including the electrodeposition induction layer 22 may be further improved.

The electrodeposition induction layer 22 may further include a second carbon-based material. For example, the electrodeposition induction layer 22 may further include the second carbon-based material that is distinguished from the first carbon-based material. For example, the electrodeposition induction layer 22 may include the first carbon-based material and the second carbon-based material, and the first carbon-based material may be different from the second carbon-based material. The second carbon-based material may be, for example, a carbon-based conductive material. The electrodeposition induction layer 22 may further include the second carbon-based material so that the internal resistance of the electrodeposition induction layer 22 may be reduced and conductivity may be imparted to the protective layer 23.

According to embodiments, the electrodeposition induction layer 22 may further include the second carbon-based material, thereby improving the dispersibility of the first carbon-based material. In some embodiments, lithium ions may be more uniformly electrodeposited on the electrodeposition induction layer 22, thereby more effectively preventing or reducing the electrodeposition and/or growth of lithium dendrites. For example, the second carbon-based material may serve as a carbon-based dispersant.

According to embodiments, the second carbon-based material may be, for example, amorphous carbon. The electrodeposition induction layer 22 may include the second carbon-based material that is amorphous carbon, and thus lithium ions may more quickly move through a surface of the amorphous carbon. The second carbon-based material may be porous or non-porous. For example, the second carbon-based material may be in a form of particles. The second carbon-based material may include, for example, spherical particles, plate-shaped particles, needle-shaped particles, or a combination thereof. For example, the particles of the second carbon-based material may have an irregular shape. An average particle diameter of the particles of the second carbon-based material may be, for example, in a range of about 10 nm to about 500 nm, about 10 nm to about 300 nm, about 10 nm to about 200 nm, about 10 nm to about 100 nm, about 10 nm to about 50 nm, about 30 nm to about 50 nm, or about 40 nm to about 50 nm. The second carbon-based material may have a particle diameter in such a range, and thus the cycle characteristics of a lithium battery including the electrodeposition induction layer 22 may be further improved. The particle diameter of the second carbon-based material may be measured, for example, through laser diffraction, scanning electron microscopy (SEM), transmission electron microscopy, atomic force microscopy, and/or the like.

According to embodiments, the second carbon-based material may include carbon black (CB), acetylene black (AB), Denka black, Ketjen black (KB), carbon nanotubes, carbon nanofibers, carbon nanobelts, graphene, graphene oxide, fullerene, activated carbon, carbon fiber, or a combination thereof. For example, the second carbon-based material may include CB, AB, Denka black, KB, or a combination thereof.

A content (e.g., amount) of the second carbon-based material may be, for example, in a range of about 1 wt% to about 99 wt%, about 10 wt% to about 50 wt%, or about 20 wt% to about 40 wt% with respect to the total weight of the electrodeposition induction layer 22. The electrodeposition induction layer 22 may include the second carbon-based material in such a range, and thus the cycle characteristics of a lithium battery including the electrodeposition induction layer 22 may be further improved.

According to embodiments, a ratio of the content (e.g., amount) of the first carbon-based material to the content (e.g., amount) of the second carbon-based material may be in a range of about 1:99 to about 99:1, about 10:90 to about 90:10, about 1:99 to about 50:50, or about 10:90 to about 50:50.

The electrodeposition induction layer 22 may further include, for example, a metal oxide. For example, the electrodeposition induction layer 22 may include the first carbon-based material and the metal oxide at the same time. For example, the electrodeposition induction layer 22 may include the first carbon-based material, the second carbon-based material, and the metal oxide at the same time. The electrodeposition induction layer 22 including the first carbon-based material and the metal oxide at the same time may be, for example, an organic-inorganic composite layer. The electrodeposition induction layer 22 may further include the metal oxide, and thus the strength and/or elasticity of the electrodeposition induction layer 22 may be improved. The durability of the electrodeposition induction layer 22 may be improved, thereby further improving the cycle characteristics of a lithium battery including the electrodeposition induction layer 22.

The metal oxide may be, for example, in a form of particles. A shape of the particles of the metal oxide is not limited. The particles of the metal oxide may be, for example, spherical particles, plate-shaped particles, needle-shaped particles, or a combination thereof. The particles of the metal oxide may have, for example, an irregular shape. An average particle diameter of the particles of the metal oxide may be, for example, in a range of about 100 nm to about 2 µm, about 200 nm to about 1 µm, or about 400 nm to about 1 µm. The metal oxide may have a particle diameter in such a range, and thus the cycle characteristics of a lithium battery including the electrodeposition induction layer 22 may be further improved. The metal oxide may be, for example, porous or non-porous. For example, the metal oxide may be crystalline or amorphous.

For example, the metal oxide may include Nb₂O₅, TiO₂, Al₂O₃, SiO₂, BaTiOs, a metal organic framework (MOF), polyhedral oligomeric silsesquioxane (POSS), Li₂CO₃, Li₃PO₄, Li₂O, montmorillonite, ZrO₂, CeO₂, Mn₃O₄, or a combination thereof, but one or more embodiments are not necessarily limited thereto. Any material may be utilized as long as the material may be utilized as a metal oxide in the art.

The metal oxide may have, for example, lithiophilicity. The metal oxide having lithiophilicity may react with lithium ions during a charging/discharging process of a lithium battery. The metal oxide may include, for example, a pseudo-capacitive oxide that reacts with lithium to form lithium metal oxide. An oxide providing pseudo-capacitive may be, for example, Nb₂O₅ or TiO₂. Nb₂O₅ may have a crystal structure belonging to, for example, an orthorhombic system. For example, Nb₂O₅ may react with lithium ions during a charging process of a lithium battery to form LiₓNb₂O₅, wherein 0<x<1. The pseudo-capacitive oxide may serve as a pseudo capacitor to store and/or disperse lithium on the electrodeposition induction layer 22. The lithium ion conduction characteristics of the electrodeposition induction layer 22 including the pseudo-capacitive oxide may be improved, and localization of lithium may be prevented or reduced so that lithium ions may be more uniformly electrodeposited on the electrodeposition induction layer 22.

A content (e.g., amount) of the metal oxide may be, for example, in a range of about 5 parts by weight to about 60 parts by weight, about 10 parts by weight to about 50 parts by weight, about 10 parts by weight to about 40 parts by weight, or about 10 parts by weight to about 30 parts by weight with respect to 100 parts by weight of the first carbon-based material. The content (e.g., amount) of the metal oxide included in the electrodeposition induction layer 22 may be, for example, in a range of about 1 wt% to about 40 wt%, about 5 wt% to about 30 wt%, or about 5 wt% to about 20 wt% with respect to the total weight of the protective layer 23. The electrodeposition induction layer 22 may include the metal oxide in such a range, and thus the cycle characteristics of a lithium battery including the electrodeposition induction layer 22 may be further improved.

For example, with respect to 100 parts by weight of the first carbon-based material, the electrodeposition induction layer 22 may include the metal oxide at a content (e.g., amount) of about 5 parts by weight to about 40 parts by weight and the second carbon-based material at a content (e.g., amount) of about 50 parts by weight to about 100 parts by weight. The electrodeposition induction layer 22 may have such a composition, and the cycle characteristics of a lithium battery including the electrodeposition induction layer 22 may be further improved.

According to embodiments, the electrodeposition induction layer 22 may further include a binder. The electrodeposition induction layer 22 may include the first carbon-based material and the binder, and thus a binding force between the first carbon-based materials may be further improved. The electrodeposition induction layer 22 may include the binder so that the electrodeposition induction layer 22 may maintain a constant shape and the mechanical strength of the electrodeposition induction layer 22 may be improved.

The binder may be, for example, a non-conductive binder or a conductive binder. The conductive binder may be, for example, an ion-conductive binder, an electron-conductive binder, or a combination thereof.

Examples of the binder may include polystyrene sulfonate (PSS), a polyvinylidene fluoride-hexafluoropropylene (PVDF-HFP) copolymer, polyvinyl fluoride (PVF), polyvinylidene fluoride (PVDF), poly(meth)acrylic acid, poly(meth)acrylate, poly(methylmethacrylate) (PMMA), polyethylene oxide (PEO), polyethylene glycol (PEG), PAN, an acrylonitrile-styrene-butadiene copolymer, polytetrafluoroethylene (PTFE), polyethylenedioxythiophene (PEDOT), polypyrrole (PPY), polyaniline, polyacetylene, styrene-butadiene rubber (SBR), PI, polyamidoimide (PAI), carboxymethylcellulose (CMC), polyvinyl chloride (PVC), modified polyphenylene oxide (PPO), PE, PP, and/or the like, but one or more embodiments are not necessarily limited thereto. The ion-conductive binder may include a polar functional group. Examples of the ion-conductive binder including the polar functional group may include NAFION^{™} AQUIVION^{®}, FLEMION^{®}, GORE^{™}, ACIPLEX^{™}, MORGANE^{®}-ADP, sulfonated poly(ether ether ketone) (SPEEK), sulfonated poly(arylene ether ketone ketone sulfone) (SPAEKKS), sulfonated poly(sulfonated poly(aryl ether ketone) (SPAEK), poly[bis(benzimidazobenzisoquinolinones)] (SPBIBI), poly(styrene sulfonate) (PSS), lithium 9,10-diphenylanthracene-2-sulfonate (DPASLi⁺), and/or the like. Examples of the electron-conductive binder may include polyacetylene, polythiophene, polypyrrole, poly(p-phenylene), poly(phenylenevinylene), poly(phenylenesulfide), polyaniline, and/or the like.

The binder may be, for example, an acrylic binder or a fluorine-based binder. The fluorine-based binder included in the electrodeposition induction layer 22 may include, for example, PVDF, PTFE, a PVDF-HFP copolymer, and/or the like. For example, the acrylic binder included in the electrodeposition induction layer 22 may include poly(meth)acrylic acid, poly(meth)acrylate, polymethyl(meth)acrylate, PAN, an acrylonitrile-styrene-butadiene copolymer, and/or the like.

A content (e.g., amount) of the binder may be, for example, in a range of about 1 part by weight to about 30 parts by weight, about 5 parts by weight to about 30 parts by weight, or about 10 parts by weight to about 30 parts by weight with respect to 100 parts by weight of the first carbon-based material. The content (e.g., amount) of the binder included in the electrodeposition induction layer 22 may be, for example, in a range of about 1 wt% to about 25 wt% or about 5 wt% to about 20 wt% with respect to the total weight of the electrodeposition induction layer 22. The electrodeposition induction layer 22 may include the binder in such a range, and thus the cycle characteristics of a lithium battery including the electrodeposition induction layer 22 may be further improved.

A thickness of the electrodeposition induction layer 22 may be, for example, in a range of about 1 µm to about 50 µm, about 3 µm to about 20 µm, about 5 µm to about 20 µm, or about 7 µm to about 15 µm, but one or more embodiments are not necessarily limited to such a range. The thickness of the electrodeposition induction layer may be adjusted according to the required shape, capacity, and/or the like of a lithium battery. If (e.g., when) the electrodeposition induction layer 22 is excessively thin, the electrodeposition induction layer 22 may be difficult to function. If (e.g., when) the thickness of the electrodeposition induction layer 22 is excessively increased, internal resistance may increase, and the energy density of a lithium battery may decrease.

### Anode: Protective layer

Referring to FIGS. 1 and 2, the anode 20 may include the anode current collector 21, the electrodeposition induction layer 22 disposed on the anode current collector 21, and the protective layer 23 disposed on the electrodeposition induction layer 22. For example, the protective layer 23 may allow lithium ions to pass through the protective layer 23 to form the lithium electrodeposition layer 24 between the electrodeposition induction layer 22 and the protective layer 23.

For example, lithium ions may uniformly pass through the protective layer 23, and thus the lithium electrodeposition layer 24 may be more uniformly precipitated between the electrodeposition induction layer 22 and the protective layer 23, thereby further improving the electrodeposition density of the lithium electrodeposition layer 24.

According to embodiments, the protective layer 23 may include a binder including at least one selected from among a repeating unit (A) derived from an ethylenically unsaturated monomer including a carboxyl group, a repeating unit (B) derived from an ethylenically unsaturated monomer including a nitrile group, a repeating unit (C) derived from an ethylenically unsaturated monomer including a polyalkylene glycol group, and a repeating unit (D) derived from an ethylenically unsaturated monomer including a fluorine group.

According to embodiments, the binder may include the repeating unit (A) derived from the ethylenically unsaturated monomer including the carboxyl group, the repeating unit (B) derived from the ethylenically unsaturated monomer including the nitrile group, and the repeating unit (C) derived from the ethylenically unsaturated monomer including the polyalkylene glycol group.

According to embodiments, the binder may include the repeating unit (D) derived from the ethylenically unsaturated monomer including the fluorine group.

For example, the binder may include at least one selected from among the repeating unit (A) derived from (e.g., including) the ethylenically unsaturated monomer including the carboxyl group, the repeating unit (B) derived from (e.g., including) the ethylenically unsaturated monomer including the nitrile group, the repeating unit (C) derived from (e.g., including) the ethylenically unsaturated monomer including the polyalkylene glycol group, and the repeating unit (D) derived from (e.g., including) the ethylenically unsaturated monomer including the fluorine group, and thus the strength, flexibility, and lithium ion conductivity of the protective layer 23 including the binder may be improved. In some embodiments, lithium ions may be more uniformly precipitated between the electrodeposition induction layer 22 and the protective layer 23 so that, in a lithium battery that includes the protective layer 23 including the binder, the electrodeposition density of the lithium electrodeposition layer 24 may be improved.

For example, the ethylenically unsaturated monomer including the carboxyl group may improve the strength of the binder. The protective layer 23 including the binder with improved strength may have reduced expansibility, and thus the electrode stability of the anode 20 including the protective layer 23 may be improved. In some embodiments, the lifespan characteristics of a lithium battery including the binder may be improved.

According to embodiments, the ethylenically unsaturated monomer including the carboxyl group may be represented by the Formula 1.

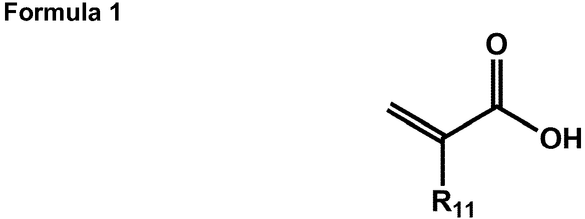

In Formula 1,
R₁₁ may be hydrogen; a C1-C10 alkyl group unsubstituted or substituted with a halogen; a C6-C20 aryl group unsubstituted or substituted with a halogen; or a C2-C20 heteroaryl group unsubstituted or substituted with a halogen.

According to embodiments, in Formula 1, R₁₁ may be hydrogen or a C1-C10 alkyl group unsubstituted or substituted with a halogen. For example, in Formula 1, R₁₁ may be hydrogen, a methyl group, or an ethyl group.

According to embodiments, the ethylenically unsaturated monomer including the carboxyl group may be acrylic acid or methacrylic acid.

According to embodiments, the ethylenically unsaturated monomer including the carboxyl group may further include an ethylenically unsaturated monomer including a carboxyl group in which hydrogen of the carboxyl group is substituted with lithium. For example, if (e.g., when) the ethylenically unsaturated monomer including the carboxyl group further includes an ethylenically unsaturated monomer including the carboxyl group in which hydrogen of the carboxyl group is substituted with lithium, the lithium conductivity of the binder may be improved. In some embodiments, the internal resistance of the protective layer 23 including the binder may be reduced, thereby reducing the internal resistance of a lithium battery including the electrodeposition induction layer 22 and improving charging/discharging efficiency.

According to embodiments, the ethylenically unsaturated monomer including the carboxyl group in which hydrogen of the carboxyl group is substituted with lithium may be represented by Formula 1-1.

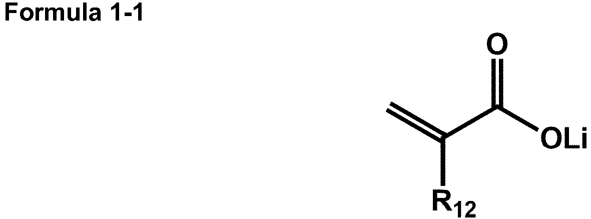

In Formula 1-1, R₁₂ may be hydrogen; a C1-C10 alkyl group unsubstituted or substituted with a halogen; a C6-C20 aryl group unsubstituted or substituted with a halogen; or a C2-C20 heteroaryl group unsubstituted or substituted with a halogen.

According to embodiments, in Formula 1-1, R₁₂ may be hydrogen; or a C1-C10 alkyl group unsubstituted or substituted with a halogen. For example, in Formula 1-1, R₁₂ may be hydrogen, a methyl group, or an ethyl group.

According to embodiments, in the ethylenically unsaturated monomer including the carboxyl group, a content (e.g., amount) of the ethylenically unsaturated monomer including the carboxyl group in which hydrogen of the carboxyl group is substituted with lithium may be in a range of about 50 mol% to about 90 mol%.

For example, the repeating unit (B) derived from the ethylenically unsaturated monomer including the nitrile group may improve the flexibility of the binder. For example, the binder may include the repeating unit (B) derived from the ethylenically unsaturated monomer including the nitrile group to have improved flexibility, and thus the flexibility of the protective layer 23 including the binder may be improved, thereby preventing or reducing cracks and damage that may occur in the protective layer 23 during a process of manufacturing a lithium by utilizing the binder. In other embodiments, the flexibility of the protective layer 23 may be improved, thereby preventing or reducing cracks and damage that may occur in the protective layer 23 during a process of providing the lithium electrodeposition layer 24 between the electrodeposition induction layer 22 and the protective layer 23.

According to embodiments, the ethylenically unsaturated monomer including the nitrile group may be represented by Formula 2.

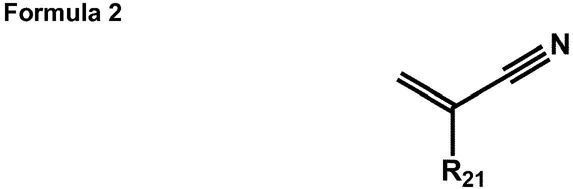

In Formula 2, R₂₁ may be hydrogen; a C1-C10 alkyl group unsubstituted or substituted with a halogen; a C6-C20 aryl group unsubstituted or substituted with a halogen; or a C2-C20 heteroaryl group unsubstituted or substituted with a halogen.

According to embodiments, in Formula 2, R₂₁ may be hydrogen or a C1-C10 alkyl group unsubstituted or substituted with a halogen. For example, in Formula 2, R2₁ may be hydrogen, a methyl group, or an ethyl group.

According to embodiments, the ethylenically unsaturated monomer including the nitrile group may be acrylonitrile or methacrylonitrile.

For example, the ethylenically unsaturated monomer including the polyalkylene glycol group may improve the lithium conductivity of the binder. For example, lithium ion conductivity may be improved by the polyalkylene glycol group contained in the ethylenically unsaturated monomer. In some embodiments, the internal resistance of the protective layer 23 including the binder may be reduced. In other embodiments, the lithium ion conductivity of the binder may be improved so that lithium ions may uniformly pass through the protective layer 23 and the lithium electrodeposition layer 24 may be more uniformly precipitated on the electrodeposition induction layer 22.

According to embodiments, the ethylenically unsaturated monomer including the polyalkylene glycol group may be represented by Formula 3.

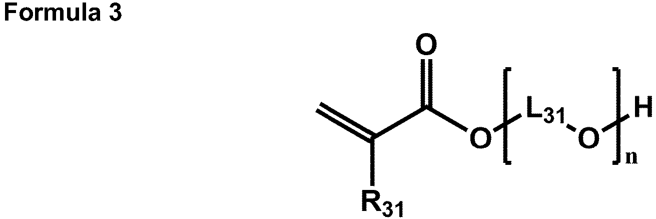

In Formula 3, R₃₁ may be hydrogen, a C1-C10 alkyl group unsubstituted or substituted with a halogen, a C6-C20 aryl group unsubstituted or substituted with a halogen, or a C2-C20 heteroaryl group unsubstituted or substituted with a halogen, L₃₁ may be a C1-C10 alkylene group unsubstituted or substituted with a halogen, and n may be an integer of 1 or more.

According to embodiments, in Formula 3, R₃₁ may be hydrogen or a C1-C10 alkyl group unsubstituted or substituted with a halogen. For example, in Formula 3, R₃₁ may be hydrogen, a methyl group, or an ethyl group.

According to embodiments, in Formula 3, L₃₁ may be a methylene group, an ethylene group, a propylene group, or a butylene group.

According to embodiments, in Formula 3, n may be an integer of 2 or more.

According to embodiments, the ethylenically unsaturated monomer including the polyalkylene glycol group may be poly(ethylene glycol) (meth)acrylate.

According to embodiments, a weight average molecular weight (Mw) of the ethylenically unsaturated monomer including the polyalkylene glycol group may be about 900 g/mol. For example, the weight average molecular weight (Mw) of the ethylenically unsaturated monomer including the polyalkylene glycol group may be in a range of about 300 g/mol to about 900 g/mol or about 300 g/mol to about 600 g/mol. For example, if (e.g., when) the weight average molecular weight (Mw) of the ethylenically unsaturated monomer including the polyalkylene glycol group satisfies the above range, the binder may have excellent or suitable inductivity, and thus lithium ion conductivity may be further improved. In some embodiments, the internal resistance of the protective layer 23 including the binder may be reduced.

According to embodiments, the ethylenically unsaturated monomer including the fluorine group may be represented by Formula 4.

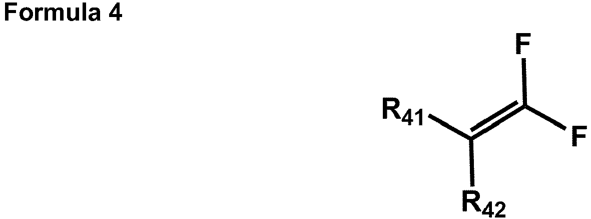

In Formula 4, R₄₁ and R₄₂ may each independently be hydrogen, a C1-C10 alkyl group unsubstituted or substituted with a halogen, a C6-C20 aryl group unsubstituted or substituted with a halogen, or a C2-C20 heteroaryl group unsubstituted or substituted with a halogen.

According to embodiments, in Formula 4, R₄₁ and R₄₂ may each independently be hydrogen or a C1-C10 alkyl group unsubstituted or substituted with a halogen. For example, in Formula 4, R₄₁ and R₄₂ may each independently be hydrogen, a methyl group, or an ethyl group.

According to embodiments, the ethylenically unsaturated monomer including the fluorine group may include vinylidene difluoride.

According to embodiments, the binder may include uoride-co-hexafluoropropylene PVDF-HFP, lithium polyacrylic acid (LiPAA), polyacrylic acid (PAA), PAN, PEG methacrylate (PEGMA), or any combination thereof.

According to embodiments, if (e.g., when) the binder includes the repeating unit (A) derived from the ethylenically unsaturated monomer including the carboxyl group; the repeating unit (B) derived from the ethylenically unsaturated monomer including the nitrile group; and the repeating unit (C) derived from the ethylenically unsaturated monomer including the polyalkylene glycol group, the binder may include lithium polyacrylic acid-polyacetonitrile-polyethyleneglycol methacrylate (LiPAA-PAN-PEGMA) or polyacrylic acid-polyacetonitrile-polyethyleneglycol methacrylate (PAA-PAN-PEGMA).

According to embodiments, with respect to the total weight of the binder, a content (e.g., amount) of the repeating unit (A) may be in a range of about 25 wt% to about 60 wt%, a content (e.g., amount) of the repeating unit (B) may be in a range of about 5 wt% to about 50 wt%, and a content (e.g., amount) of the repeating unit (C) may be in a range of about 5 wt% to about 50 wt%.

According to embodiments, the content (e.g., amount) of the repeating unit (A) may be in a range of about 25 wt% to about 50 wt%, about 25 wt% to about 45 wt%, about 30 wt% to about 50 wt%, or about 30 wt% to about 45 wt% with respect to the total weight of the binder.

According to embodiments, the content (e.g., amount) of the repeating unit (B) may be in a range of about 5 wt% to about 50 wt%, about 15 wt% to about 50 wt%, about 25 wt% to about 50 wt%, or about 25 wt% to about 40 wt% with respect to the total weight of the binder.

According to embodiments, the content (e.g., amount) of the repeating unit (C) may be in a range of about 5 wt% to about 50 wt%, about 15 wt% to about 50 wt%, about 30 wt% to about 50 wt%, or about 30 wt% to about 45 wt% with respect to the total weight of the binder.

According to embodiments, if (e.g., when) the binder includes the repeating unit (D) derived from the ethylenically unsaturated monomer including the fluorine group, the binder may include PVDF-HFP.

According to embodiments, if (e.g., when) the binder includes the repeating unit (D) derived from the ethylenically unsaturated monomer including the fluorine group, the protective layer 23 may further include an inorganic oxide. For example, the inorganic oxide may include aluminum oxide (Al₂O₃).

According to embodiments, the binder may include a random copolymer or a block or reduce copolymer. For example, the binder may include the random copolymer.

A weight average molecular weight of the binder may be in a range of about 10,000 g/mol to about 2,000,000 g/mol. For example, the weight average molecular weight of the binder may be in a range of about 50,000 g/mol to about 1,000,000 g/mol. For example, the weight average molecular weight of the binder may be in a range of about 100,000 g/mol to about 1,000,000 g/mol.

### Anode: Lithium electrodeposition layer

Referring to FIG. 2, the anode 20 after charging may include the anode current collector 21, the electrodeposition induction layer 22 disposed on the anode current collector 21; the protective layer 23 disposed on the electrodeposition induction layer 22, and the lithium electrodeposition layer 24 disposed between the electrodeposition induction layer 22 and the protective layer 23, wherein the lithium electrodeposition layer 24 includes a lithium metal or a lithium alloy.

After the anode 20 is introduced into a lithium battery together with a cathode and an electrolyte, through charging, a lithium metal may be precipitated on the electrodeposition induction layer 22 to include the lithium electrodeposition layer 24. The lithium electrodeposition layer 24 may include, for example, the lithium metal or lithium alloy.

For example, the lithium alloy may be an alloy of lithium and a metal, which is alloyable with lithium, other than lithium. For example, the lithium alloy may be a lithium-silver alloy, a lithium-zinc alloy, a lithium-magnesium alloy, a lithium-tin alloy, and/or the like.

According to embodiments, the lithium electrodeposition layer 24 may include a spherical lithium metal or a spherical lithium alloy. For example, as the lithium electrodeposition layer 24 is formed between the protective layer 23 and the electrodeposition induction layer 22 which includes a first carbon-based material including a nitrogen atom, the electrodeposition of lithium ions may be induced by the nitrogen atom, and lithium ions may be uniformly precipitated by the protective layer 23. In some embodiments, the spherical lithium metal or the lithium alloy may be uniformly precipitated between the electrodeposition induction layer 22 and the protective layer 23. In some embodiments, the lithium electrodeposition layer 24 may include the spherical lithium metal or lithium alloy.

According to embodiments, an average particle diameter (D50) of the lithium metal or lithium alloy (e.g., in a form of particles) of the above embodiments may be in a range of about 0.1 µm to about 15 µm, about 0.1 µm to about 12 µm, about 0.1 µm to about 10 µm, about 1 µm to about 15 µm, about 2 µm to about 15 µm, about 3 µm to about 15 µm, or about 3 µm to about 10 µm.

A thickness of the lithium electrodeposition layer 24 may be, for example, about 50 µm or less, about 40 µm or less, about 35 µm or less, about 30 µm or less, about 28 µm or less, or in a range of about 1 µm to about 50 µm, about 1 µm to about 40 µm, about 5 µm to about 40 µm, about 10 µm to about 35 µm, about 10 µm to about 30 µm, or about 10 µm to about 28 µm. For example, the lithium electrodeposition layer 24 may have a thickness in such a range, and thus the energy density of a lithium battery may be further improved.

According to embodiments, the thickness of the lithium electrodeposition layer 24 upon full charging may be about 35 µm or less, about 30 µm or less, about 28 µm or less, or in a range of about 10 µm to about 35 µm, about 10 µm to about 30 µm, or about 10 µm to about 28 µm. According to embodiments, the density of the lithium electrodeposition layer 24 may be in a range of about 0.4 g/cc to about 0.5 g/cc or about 0.43 g/cc to about 0.5 g/cc.

### Anode: Anode interlayer

Referring to FIGS. 1 and 2, the anode 20 may optionally further include an anode interlayer disposed between the anode current collector 21 and the electrodeposition induction layer 22. The anode 20 may additionally include the anode interlayer, and thus the generation and/or growth of lithium dendrites at the anode 20 may be more effectively suppressed or reduced. The anode interlayer may not be provided.

The anode interlayer may include, for example, an anode active material and a binder. The anode active material may be an anode material that may be lithiated and delithiated. The anode active material included in the anode interlayer may have, for example, a form of particles. An average particle diameter of the particles of the anode active material having the particle form may be, for example, in a range of about 10 nm to about 4 µm, about 10 nm to about 1 µm, about 10 nm to about 500 nm, about 10 nm to about 100 nm, or about 20 nm to about 80 nm. The anode active material may have an average particle diameter in such a range, and thus the reversible electrodeposition and/or dissolution of lithium may be more easily performed during charging/discharging. The average particle diameter of the anode active material may be, for example, a median diameter (D50) measured by utilizing a laser type or kind particle size distribution meter.

The anode active material included in the anode interlayer may include, for example, at least one selected from among a carbon-based anode active material and a metal or metalloid anode active material. The carbon-based anode active material may be, for example, amorphous carbon. Examples of the carbon-based anode active material may include CB, AB, furnace black (FB), KB, graphene, and/or the like, but one or more embodiments are not necessarily limited thereto. Any material may be utilized for the carbon-based anode active material as long as the material may be classified as amorphous carbon in the art. The amorphous carbon may be carbon that has no crystallinity or very low crystallinity and may be distinguished from crystalline carbon or graphite-based carbon. The metal or metalloid anode active material may include at least one selected from among gold (Au), platinum (Pt), palladium (Pd), silicon (Si), silver (Ag), aluminum (Al), bismuth (Bi), tin (Sn), and zinc (Zn), but one or more embodiments are not necessarily limited thereto. Any material may be utilized as long as the material may be utilized as a metal anode active material or a metalloid anode active material which forms an alloy or compound together with lithium in the art. For example, nickel (Ni) may not form an alloy together with lithium and thus may not be a metal anode active material in the present specification. The anode interlayer may include one type or kind of anode active material among such anode active materials or a mixture of a plurality of different anode active materials. The anode interlayer may include, for example, a mixture of amorphous carbon and at least one selected from among gold (Au), platinum (Pt), palladium (Pd), silicon (Si), silver (Ag), aluminum (Al), bismuth (Bi), tin (Sn), and zinc (Zn). A mixing ratio of the mixture may be, for example, a weight ratio of about 10:1 to about 1:2, about 10:1 to about 1:1, about 7:1 to about 1:1, about 5:1 to about 1:1, or about 4:1 to about 2:1. The anode active material included in the anode interlayer may include, for example, a mixture of first particles consisting of amorphous carbon and second particles including (e.g., consisting of) metal or metalloid. Examples of the metal may include, for example, gold (Au), platinum (Pt), palladium (Pd), silicon (Si), silver (Ag), aluminum (Al), bismuth (Bi), tin (Sn), zinc (Zn), and/or the like. A content (e.g., amount) of the second particles may be in a range of about 8 wt% to about 60 wt%, about 10 wt% to about 50 wt%, about 15 wt% to about 40 wt%, or about 20 wt% to about 30 wt% with respect to the total weight of the mixture. The content (e.g., amount) of the second particles may be in such a range, and thus for example, the cycle characteristics of a lithium battery may be further improved.

The binder included in the anode interlayer may include, for example, SBR, PTFE, PVDF, PE, a vinylidene fluoride/hexafluoropropylene copolymer, PAN, polymethyl methacrylate, and/or the like, but one or more embodiments are not necessarily limited thereto. Any material may be utilized as long as the material may be utilized as a binder in the art. The binder may be provided as a single binder or a plurality of different binders. If (e.g., when) the anode interlayer does not include a binder, the anode interlayer may be easily separated from the anode current collector 21. A content (e.g., amount) of the binder included in the anode interlayer may be, for example, in a range of about 1 wt% to about 20 wt% with respect to the total weight of the anode interlayer.

A thickness of the anode interlayer may be, for example, in a range of about 1 µm to about 20 µm, about 1 µm to about 15 µm, about 2 µm to about 10 µm, or about 3 µm to about 7 µm. The thickness of the anode interlayer may be, for example, in a range of about 1 % to about 50 %, about 1 % to about 30 %, about 1 % to about 10 %, or about 1 % to about 5 % of a thickness of a cathode active material layer. If (e.g., when) the anode interlayer is excessively thin, lithium dendrites formed between the anode interlayer and the anode current collector 21 may collapse the anode interlayer, which may make it difficult to improve the cycle characteristics of a lithium battery. If (e.g., when) the thickness of the anode interlayer excessively increases, the energy density of a lithium battery adopting the anode 20 may decrease, and the cycle characteristics thereof may be difficult to improve. If (e.g., when) the thickness of the anode interlayer decreases, for example, the charge capacity of the anode interlayer may also decrease. The charge capacity of the anode interlayer may be, for example, in a range of about 0.1 % to about 50 %, about 1 % to about 30 %, about 1 % to about 10 %, about 1 % to about 5%, or about 1 % to about 2% of charge capacity. If (e.g., when) the charge capacity of the anode interlayer is excessively low, lithium dendrites formed between the anode interlayer and the anode current collector 21 may collapse the anode interlayer, which may make it difficult to improve the cycle characteristics of a lithium battery. If (e.g., when) the charge capacity of the anode interlayer excessively increases, the energy density of a lithium battery adopting the anode 20 may decrease, and the cycle characteristics thereof may be difficult to improve. A charge capacity of the cathode active material layer may be obtained by multiplying a charge capacity density (mAh/g) of a cathode active material by a mass of the cathode active material in the cathode active material layer. If (e.g., when) several types (kinds) of cathode active materials are utilized, a value of charge capacity density×mass may be calculated for each cathode active material, and the sum of the values may be the charge capacity of the cathode active material layer. The charge capacity of the anode interlayer may also be calculated in substantially the same way. For example, the charge capacity of the anode interlayer may be obtained by multiplying a charge capacity density (mAh/g) of the anode active material by a mass of the anode active material in the anode interlayer. If (e.g., when) several types (kinds) of anode active materials are utilized, a value of charge capacity density×mass may be calculated for each anode active material, and the sum of the values may be the charge capacity of the anode interlayer. In some embodiments, the charge capacity densities of the cathode active material and the anode active material may be capacities estimated by utilizing an all-solid half-cell utilizing a lithium metal as a counter electrode. The charge capacities of the cathode active material layer and the anode interlayer layer may be directly measured by measuring charge capacity by utilizing an all-solid half-cell. If (e.g., when) the measured charge capacity is divided by a mass of each active material, a charge capacity density may be obtained. In other embodiments, the charge capacities of the cathode active material layer and the anode interlayer may be initial charge capacities measured during charging of a first cycle.

According to embodiments, the above-described cathode interlayer may be absent between the electrodeposition induction layer 22 and the protective layer 23.

### Lithium battery

A lithium battery according to embodiments may include a cathode, the above-described anode, and an electrolyte disposed between the cathode and the anode. For example, the anode may include an electrodeposition induction layer including the above-described first carbon-based material. The lithium battery may include the above-described anode and thus may have improved capacity and excellent or suitable lifespan characteristics at the same time. The lithium battery may be, for example, a lithium primary battery, a lithium secondary battery, a lithium-sulfur battery, a lithium-air battery, a lithium metal battery, or an anode-free lithium metal battery, but is not limited thereto. Any lithium battery may be utilized as long as the lithium battery may be utilized in the art.

For example, the lithium battery may be manufactured through the following example method, but one or more embodiments are not necessarily limited thereto. A method may be adjusted according to conditions.

### anode

An anode 20, which includes an electrodeposition induction layer 22 including the above-described first carbon-based material, and a protective layer 23 may be prepared.

### cathode

First, a cathode active material, a conductive agent, a binder, and a solvent may be mixed to prepare a cathode active material composition. The prepared cathode active material composition may be applied directly onto an aluminum current collector and dried to prepare a cathode plate on which a cathode active material layer is formed. In other embodiments, the cathode active material composition may be cast on a separate support, and then a film obtained by being peeled off of the support may be laminated on the aluminum current collector to prepare a cathode plate on which a cathode active material layer is formed.

As the cathode active material, any material, which is a lithium-containing metal oxide and is commonly utilized in the art, may be utilized without limitation. For example, the cathode active material may include at least one composite oxide of lithium and a metal selected from among cobalt, manganese, nickel, and a combination thereof. A specific example of the cathode active material may include a compound represented by any one of formulas of LiₐA_{1-b}BD₂, wherein 0.90≤a≤1 and 0≤b≤0.5; LiₐE_{1-b}B_{b}O_{2-c}D_{c} wherein 0.90≤a≤1, 0≤b≤0.5, and 0≤c≤0.05; LiE_{2-b}B_{b}O_{4-c}D_{c}, wherein 0≤b≤0.5 and 0≤c≤0.05; LiₐNi_{1-b-c}Co_{b}B_{c}Dₐ, wherein 0.90≤a≤1, 0≤b≤0.5, 0≤c≤0.05, and 0<α≤2; LiₐNi_{1-b-c}Co_{b}B_{c}O_{2-α}F_{α}, wherein 0.90≤a≤1, 0≤b≤0.5, 0≤c≤0.05, and 0<α<2; LiₐNi_{1-b-c}Co_{b}B_{c}O_{2-α}F₂, wherein 0.90≤a≤1, 0≤b≤0.5, 0≤c≤0.05, and 0<α<2; LiₐNi_{1-b-c}Mn_{b}B_{c}D_{α}, wherein 0.90≤a≤1, 0≤b≤0.5, 0≤c≤0.05, and 0<α≤2; LiₐNi_{1-b-c}Mn_{b}B_{c}O_{2-α}F_{α}, wherein 0.90≤a≤1, 0≤b≤0.5, 0≤c≤0.05, and 0<α<2; LiₐNi_{1-b-c}Mn_{b}B_{c}O_{2-α}F₂, wherein 0.90≤a≤1, 0≤b≤0.5, 0≤c≤0.05, and 0<α<2; LiₐNi_{b}E_{c}G_{d}O₂, wherein 0.90≤a≤1, 0≤b≤0.9, and 0≤c≤0.5, and 0.001 ≤d≤0.1; LiₐNi_{b}Co_{c}Mn_{d}GeO₂, wherein 0.90≤a≤1, 0≤b≤0.9, 0≤c≤0.5, 0≤d≤0.5, and 0.001≤e≤0.1; LiₐNiG_{b}O₂, wherein 0.90≤a≤1 and 0.001≤b≤0.1; LiₐCoG_{b}O₂, wherein 0.90≤a≤1 and 0.001 ≤b≤0.1, LiₐMnG_{b}O₂, wherein 0.90≤a≤1 and 0.001 ≤b≤0.1; LiₐMn₂G_{b}O₄, wherein 0.90≤a≤1 and 0.001 ≤b≤0.1; QO₂; QS₂; LiQS₂; V₂O₅; LiV₂O₅; LiIO₂; LiNiVO₄; Li_{(3-f)}J₂(PO₄)₃, wherein 0≤f≤2; Li_{(3-f)}Fe₂(PO₄)₃, wherein 0≤f≤2; and LiFePO₄.

In the formulas representing the above-described compounds, A may be Ni, Co, Mn, or a combination thereof, B may be Al, Ni, Co, Mn, Cr, Fe, Mg, Sr, V, a rare earth element, or a combination thereof, D may be O, F, S, P, or a combination thereof, E may be Co, Mn, or a combination thereof, F may be F, S, P, or a combination thereof, G may be Al, Cr, Mn, Fe, Mg, La, Ce, Sr, V, or a combination thereof, Q may be Ti, Mo, Mn, or a combination thereof, I may be Cr, V, Fe, Sc, Y, or a combination thereof, and J may be V, Cr, Mn, Co, Ni, Cu, or a combination thereof. A compound in which a coating layer is added to a surface of the above compound may also be utilized, and a mixture of the above compound and a compound in which a coating layer is added may also be utilized. The coating layer added to the surface of the above compound may include, for example, a coating element compound of an oxide or a hydroxide of a coating element, an oxyhydroxide of a coating element, an oxycarbonate of a coating element, or a hydroxycarbonate of a coating element. A compound constituting the coating layer may be amorphous or crystalline. The coating element included in the coating layer may include Mg, Al, Co, K, Na, Ca, Si, Ti, V, Sn, Ge, Ga, B, As, Zr, or a mixture thereof. A method of providing the coating layer may be selected within a range that does not adversely affect the physical properties of the cathode active material. A coating method may include, for example, spray coating, dipping, and/or the like. A specific coating method may be well understood by those skilled in the art, and thus a detailed description thereof will not be provided.

The cathode active material may include, for example, LiₐNiₓCo_{y}M_{z}O_{2-b}A_{b}, wherein 1.0≤a≤1.2, 0≤b≤0.2, 0.8≤x<1, 0<y≤0.3, 0<z≤0.3, x+y+z=1, M is manganese (Mn), niobium (Nb), vanadium (V), magnesium (Mg), gallium (Ga), silicon (Si), tungsten (W), molybdenum (Mo), iron (Fe), chromium (Cr), copper (Cu), zinc (Zn), titanium (Ti), aluminum (Al), boron (B), or a combination thereof, and A is F, S, Cl, Br, or a combination thereof; LiNiₓCo_{y}Mn_{z}O₂, wherein 0.8≤x≤0.95, 0≤y≤0.2, 0<z≤0.2, and x+y+z=1; LiNiₓCo_{y}Al_{z}O₂, wherein 0.8≤x≤0.95, 0≤y≤0.2, 0<z≤0.2, and x+y+z=1; LiNiₓCo_{y}Mn_{z}Al_{w}O₂, wherein 0.8≤x≤0.95, 0≤y≤0.2, 0<z≤0.2, 0<w≤0.2, and x+y+z+w=1; LiₐCoₓM_{y}O_{2-b}A_{b}, wherein 1.0≤a≤1.2, 0≤b≤0.2, 0.9≤x≤1, 0≤y≤0.1, x+y=1, M is manganese (Mn), niobium (Nb), vanadium (V), magnesium (Mg), gallium (Ga), silicon (Si), tungsten (W), molybdenum (Mo), iron (Fe), chromium (Cr) ), copper (Cu), zinc (Zn), titanium (Ti), aluminum (Al), boron (B), or a combination thereof, and A is F, S, Cl, Br, or a combination thereof; LiₐNiₓMn_{y}M'_{z}O_{2-b}A_{b}, wherein 1.0≤a≤1.2, 0≤b≤0.2, 0<x≤0.3, 0.5≤y<1, 0<z≤0.3, x+y+z=1, M' is cobalt (Co), niobium (Nb), vanadium (V), magnesium (Mg), gallium (Ga), silicon (Si), tungsten (W), molybdenum (Mo), iron (Fe), chromium ( Cr), copper (Cu), zinc (Zn), titanium (Ti), aluminum (Al), boron (B), or a combination thereof, and A is F, S, Cl, Br, or a combination thereof; LiₐM1ₓM2_{y}PO_{4-b}X_{b}, wherein 0.90≤a≤1.1, 0≤x≤0.9, 0≤y≤0.5, 0.9<x+y<1.1, 0≤b≤2, M1 is chromium (Cr), manganese (Mn), iron (Fe), cobalt (Co), nickel (Ni), copper (Cu), zirconium (Zr), or a combination thereof, M2 is magnesium (Mg), calcium (Ca), strontium (Sr), barium (Ba), titanium (Ti), zinc (Zn), boron (B), niobium (Nb), gallium (Ga), indium (In) ), molybdenum (Mo), tungsten (W), aluminum (Al), silicon (Si), chromium (Cr), vanadium (V), scandium (Sc), yttrium (Y), or a combination thereof, and X is O, F, S, P, or a combination thereof; or LiₐM3_{z}PO₄, wherein 0.90≤a≤1.1, 0.9≤z≤1.1, and M3 is chromium (Cr), manganese (Mn), iron (Fe), cobalt (Co), nickel (Ni), copper (Cu), zirconium (Zr), or a combination thereof.

Examples of the conductive agent may include CB, graphite particles, natural graphite, artificial graphite, AB, KB, and carbon fiber; carbon nanotubes; a metal powder, a metal fiber, or a metal tube of copper, nickel, aluminum, or silver; and a conductive polymer such as a polyphenylene derivative, but one or more embodiments are not limited thereto. Any material may be utilized as long as the material may be utilized as a conductive material in the art. In other embodiments, the cathode may not include (e.g., may exclude), for example, a separate conductive material.

Examples of the binder may include a vinylidene fluoride/hexafluoropropylene copolymer, PVDF, PAN, polymethyl methacrylate, PTFE, a mixture of the above polymers, an SBR-based polymer, and/or the like. Example of the solvent may include N-methylpyrrolidone (NMP), acetone, water, and/or the like, but one or more embodiments are not necessarily limited thereto. Any material used in the art for a solvent may be utilized.

A plasticizer or a pore former may be further added to the cathode active material composition to form pores in an electrode plate.

Contents of the cathode active material, the conductive agent, the binder, and the solvent utilized in the cathode are at levels commonly utilized in a lithium battery. According to the use and configuration of a lithium battery, one or more of the conductive material, the binder, and the solvent may not be provided.

The content (e.g., amount) of the binder included in the cathode may be in a range of about 0.1 wt% to about 10 wt% or about 0.1 wt% to about 5 wt% with respect to the total weight of the cathode active material layer. The content (e.g., amount) of the cathode active material included in the cathode may be in a range of about 80 wt% to about 99 wt%, about 90 wt% to about 99 wt%, or about 95 wt% to about 99 wt% with respect to the total weight of the cathode active material layer.

### Separator

Next, a separator to be inserted between the cathode and the anode may be prepared.

Any separator may be utilized as long as the separator is commonly utilized in a lithium battery. For example, a separator having low resistance to the movement of ions in an electrolyte and an excellent or suitable electrolyte impregnation ability may be utilized. For example, the separator may include at least one selected from among glass fiber, polyester, Teflon, PE, PP, PTFE, and a combination thereof and may be in the form of a nonwoven fabric or a woven fabric. For example, a windable separator including PE, PP, and/or the like may be utilized in a lithium ion battery, and a separator having an excellent or suitable electrolyte impregnation ability may be utilized in a lithium ion polymer battery.

The separator may be prepared through the following example method, but one or more embodiments are not necessarily limited to such a method. A method may be adjusted according to conditions.

First, a polymer resin, a filler, and a solvent may be mixed to prepare a separator composition. The separator composition may be applied directly onto an electrode and dried to form the separator. In other embodiments, the separator composition may be cast on a support, and then a separator film peeled off of the support may be laminated on an electrode to form the separator.

A polymer utilized for preparing the separator is not limited, and any material may be utilized as long as the material may be utilized in a binding material of an electrode plate. For example, the polymer may include a vinylidene fluoride/hexafluoropropylene copolymer, PVDF, PAN, polymethyl methacrylate, or a mixture thereof.

### Electrolyte

Next, an electrolyte may be prepared.

The electrolyte may be, for example, a liquid electrolyte, a solid electrolyte, a gel electrolyte, or a combination thereof.

The electrolyte may be, for example, an organic electrolyte. For example, a lithium salt may be dissolved in an organic solvent to prepare the organic electrolyte.

As the organic solvent, any material may be utilized as long as the material may be utilized as an organic solvent in the art. Examples of the organic solvent may include propylene carbonate, ethylene carbonate (EC), fluoroethylene carbonate, butylene carbonate, dimethyl carbonate (DMC), diethyl carbonate, methyl ethyl carbonate, methyl propyl carbonate, ethyl propyl carbonate, methyl isopropyl carbonate, dipropyl carbonate, dibutyl carbonate, benzonitrile, acetonitrile, tetrahydrofuran, 2-methyltetrahydrofuran, γ-butyrolactone, dioxolane, 4-methyldioxolane, N,N-dimethylformamide, dimethylacetamide, dimethyl sulfoxide, dioxane, 1,2-dimethoxyethane, sulfolane, dichloroethane, chlorobenzene, nitrobenzene, diethylene glycol, dimethyl ether, or a mixture thereof.

As the lithium salt, any material may be utilized as long as the material is utilized as a lithium salt in the art. Examples of the lithium salt may include LiPF₆, LiBF₄, LiSbF₆, LiAsF₆, LiClO₄, LiCF₃SO₃, Li(CF₃SO₂)₂N, LiC₄F₉SO₃, LiAlO₂, LiAlCl₄, LiN(CₓF₂ₓ₊₁SO₂)(C_{y}F_{2y+1}SO₂), wherein 1≤x≤20 and 1≤y≤20, LiCl, Lil, or a mixture thereof. A concentration of the lithium salt may be, for example, in a range of about 0.1 M to about 5.0 M.

The solid electrolyte may be, for example, an oxide-based solid electrolyte, a sulfide-based solid electrolyte, a polymer-based solid electrolyte, or a combination thereof.

The solid electrolyte may be, for example, an oxide-based solid electrolyte. The oxide-based solid electrolyte may include at least one selected from among Li_{1+x+y}AlₓTi₂₋ₓSi_{y}P_{3-y}O₁₂, wherein 0<x<2 and 0≤y<3, BaTiO₃, Pb(Zr,Ti)O₃(PZT), Pb₁₋ₓLaₓZr_{1-y} Ti_{y}O₃ (PLZT), wherein O≤x<1 and O≤y<1, PB(Mg₃Nb_{2/3})O₃-PbTiO₃ (PMN-PT), HfO₂, SrTiO₃, SnO₂, CeO₂, Na₂O, MgO, NiO, CaO, BaO, ZnO, ZrO₂, Y₂O₃, Al₂O₃, TiO₂, SiO₂, Li₃PO₄, LiₓTi_{y}(PO₄)₃, wherein 0<x<2 and 0<y<3, LiₓAl_{y}Ti_{z}(PO₄)₃, wherein 0<x<2, 0<y<1, and 0<z<3, Li_{1+x+y}(Al, Ga)ₓ(Ti, Ge)₂₋ₓSi_{y}P_{3-y}O₁₂, wherein 0≤x≤1 and 0≤y≤1, LiₓLa_{y}TiO₃, wherein 0<x<2 and 0<y<3, Li₂O, LiOH, Li₂CO₃, LiAlO₂, Li₂O-Al₂O₃-SiO₂-P₂O₅-TiO₂-GeO₂, and Li₃₊ₓLa₃M₂O₁₂, wherein M=Te, Nb, or Zr, and x is an integer from 1 to 10. The solid electrolyte may be prepared through sintering and/or the like. For example, the oxide-based solid electrolyte may be a garnet-type or kind (e.g., a garnet) solid electrode selected from among Li₇La₃Zr₂O₁₂ (LLZO) and Li₃₊ₓLa₃Zr₂₋ₐMₐO₁₂ (LLZO doped with M), wherein M=Ga, W, Nb, Ta, or Al, and x is an integer from 1 to 10.

The sulfide-based solid electrolyte may include, for example, lithium sulfide, silicon sulfide, phosphorus sulfide, boron sulfide, or a combination thereof. Sulfide-based solid electrolyte particles may include Li₂S, P₂S₅, SiS₂, GeS₂, B₂S₃, or a combination thereof. The sulfide-based solid electrolyte particles may include Li₂S or P₂S₅. The sulfide-based solid electrolyte particles are suitable to have higher lithium ion conductivity than other inorganic compounds. For example, the sulfide-based solid electrolyte may include Li₂S and P₂S₅. If (e.g., when) a sulfide solid electrolyte material constituting the sulfide-based solid electrolyte includes Li₂S-P₂S₅, a mixing molar ratio of Li₂S to P₂S₅ may be, for example, in a range of about 50:50 to about 90:10. In some embodiments, an inorganic solid electrolyte, which is prepared by adding Li₃PO₄, a halogen, a halogen compound, Li₂₊₂ₓZn₁₋ₓGeO₄ ("LISICON"), wherein 0≤x<1, Li_{3+y}PO₄₋ₓNₓ (LIPON), wherein 0<x<4 and 0<y<3, Li_{3.25}Ge_{0.25}P_{0.75}S₄ ("Thio LISICON"), Li₂O-Al₂O₃-TiO₂-P₂O₅ "(LATP"), and/or the like to Li₂S-P₂S₅, SiS₂, GeS₂, B₂S₃, or a combination, may be utilized as the sulfide-based solid electrolyte. Non-limiting examples of the sulfide solid electrolyte material may include Li₂S-P₂S₅; Li₂S-P₂S₅-LiX, wherein X is a halogen element; Li₂S-P₂S₅-Li₂O; Li₂S-P₂S₅-Li₂O-LiI; Li₂S-SiS₂; Li₂S-SiS₂-LiI; Li₂S-SiS₂-LiBr; Li₂S-SiS₂-LiCl; Li₂S-SiS₂-B₂S₃-LiI; Li₂S-SiS₂-P₂S₅-LiI; Li₂S-B₂S₃; Li₂S-P₂S₅-ZₘSₙ, wherein 0<m<10, 0<n<10, and Z=Ge, Zn, or Ga; Li₂S-GeS₂; Li₂S-SiS₂-Li₃PO₄; and Li₂S-SiS₂-LiₚMO_{q}, wherein 0<p<10, 0<q<10, and M=P, Si, Ge, B, Al, Ga, or In. In this regard, the sulfide-based solid electrolyte material may be prepared by treating a raw starting material (for example, Li₂S or P₂S₅) of the sulfide-based solid electrolyte material through melt quenching, mechanical milling, and/or the like. In some embodiments, a calcination process may be performed after the treating. The sulfide-based solid electrolyte may be in an amorphous state, a crystalline state, or a mixture state thereof.

The polymer solid electrolyte may be, for example, an electrolyte including a mixture of a lithium salt and a polymer or may include a polymer having an ion-conductive functional group. The polymer solid electrolyte may be, for example, a polymer electrolyte that does not include a liquid electrolyte. The polymer included in the polymer solid electrolyte may include, for example, PEO, PVDF, PVDF-HFP, a poly(styrene-b-ethylene oxide) (PS-PEO) block or reduce copolymer, poly(styrene-butadiene), poly(styrene-isoprene-styrene), a poly(styrene-b-divinylbenzene) block or reduce copolymer, a poly(styrene-ethylene oxide-styrene) block or reduce copolymer, PSS, PVF, PMMA, PEG, PAN, PTFE, PEDOT, PPY, polyaniline, poly acetylene, NAFION^{™} AQUIVION^{®}, FLEMION^{®}, GORE^{™}, ACIPLEX^{™}, MORGANE^{®}-ADP, SPEEK, SPAEKKS, SPAEK, SPBIBI, PSS, DPASLi⁺, or a combination thereof, but one or more embodiments are not limited thereto. Any material may be utilized as long as the material may be utilized in a polymer electrolyte in the art. As the lithium salt, any material may be utilized as long as the material may be utilized as a lithium salt in the art. The lithium salt may include, for example, LiPF₆, LiBF₄, LiSbF₆, LiAsF₆, LiClO₄, LiCF₃SO₃, Li(CF₃SO₂)₂N, LiC₄F₉SO₃, LiAlO₂, LiAlCl₄, LiN(CₓF₂ₓ₊₁SO₂)(C_{y}F_{2y+1}SO₂), wherein x and y are each a natural number from 1 to 20, LiCl, Lil, or a mixture thereof.

The gel electrolyte may be, for example, a gel polymer electrolyte. The gel polymer electrolyte may be, for example, an electrolyte including a liquid electrolyte and a polymer or including an organic solvent and a polymer having an ion-conductive functional group. The liquid electrolyte may include, for example, a mixture of an ionic liquid, a lithium salt, and an organic solvent, a mixture of an ionic liquid and an organic solvent, or a mixture of a lithium salt and an ionic liquid or an organic solvent. The polymer may be selected from among polymers utilized in a solid polymer electrolyte. The organic solvent may be selected from among organic solvents utilized in a liquid electrolyte. The lithium salt may be selected from among lithium salts utilized in a solid polymer electrolyte. The ionic liquid may refer to a salt in a liquid state at room temperature or a room-temperature molten salt that has a melting point at room temperature or less and includes (e.g., consists of) only ions. The ionic liquid may include, for example, at least one selected from among compounds including a) one cation selected from among an ammonium-based cation, a pyrrolidinium-based cation, pyridinium-based cation, a pyrimidinium-based cation, an imidazolium-based cation, a piperidinium-based cation, a pyrazolium-based cation, an oxazolium-based cation, a pyridazinium-based cation, a phosphonium-based cation, a sulfonium-based cation, a triazolium-based cation, and a mixture thereof, and b) at least one anion selected from among BF₄-, PF₆-, AsF₆-, SbF₆-, AlCl₄-, HSO₄-, ClO₄-, CH₃SO₃-, CF₃CO₂-, Cl-, Br-, I-, BF₄-, SO₄-, CF₃SO₃-, (FSO₂)₂N-, (C₂F₅SO₂)₂N-, (C₂F₅SO₂)(CF₃SO₂)N-, and (CF₃SO₂)₂N-. The polymer solid electrolyte may be impregnated in an electrolyte solution in a lithium battery to form the gel polymer electrolyte. The gel electrolyte may further include inorganic particles.

### Lithium battery

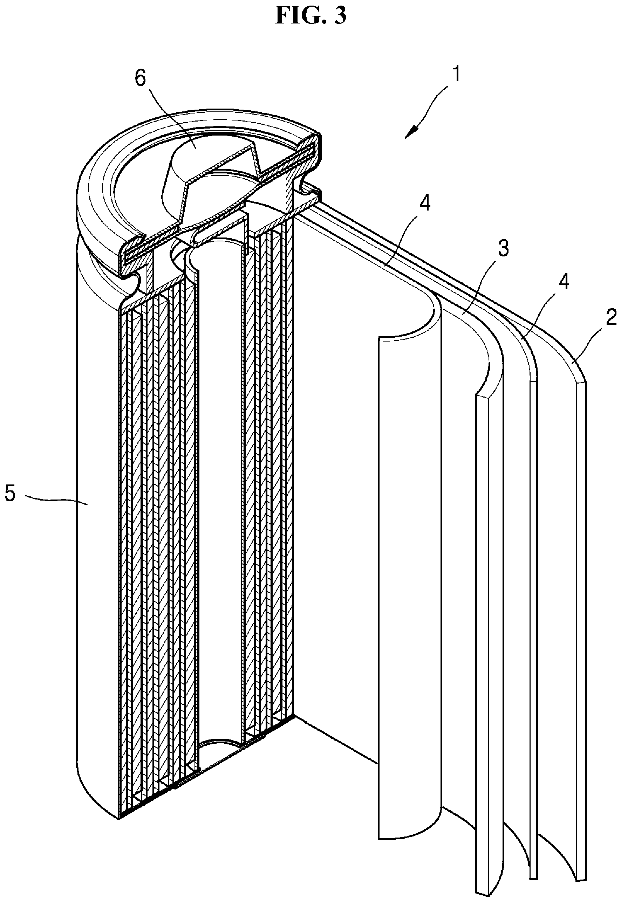

Referring to FIG. 3, a lithium battery 1 according to embodiments may include a cathode 3, an anode 2 described above, and a separator 4. The cathode 3, the anode 2, and the separator 4 may be wound or folded to form a battery structure. The formed battery structure may be accommodated in a battery case 5. An organic electrolyte may be injected into the battery case 5, and the battery case 5 may be sealed with a cap assembly 6 to complete the lithium battery 1. The battery case 5 may have a cylindrical shape, but one or more embodiments are not necessarily limited to such a shape. For example, the battery case 5 may have a prismatic shape, a thin film shape, and/or the like.

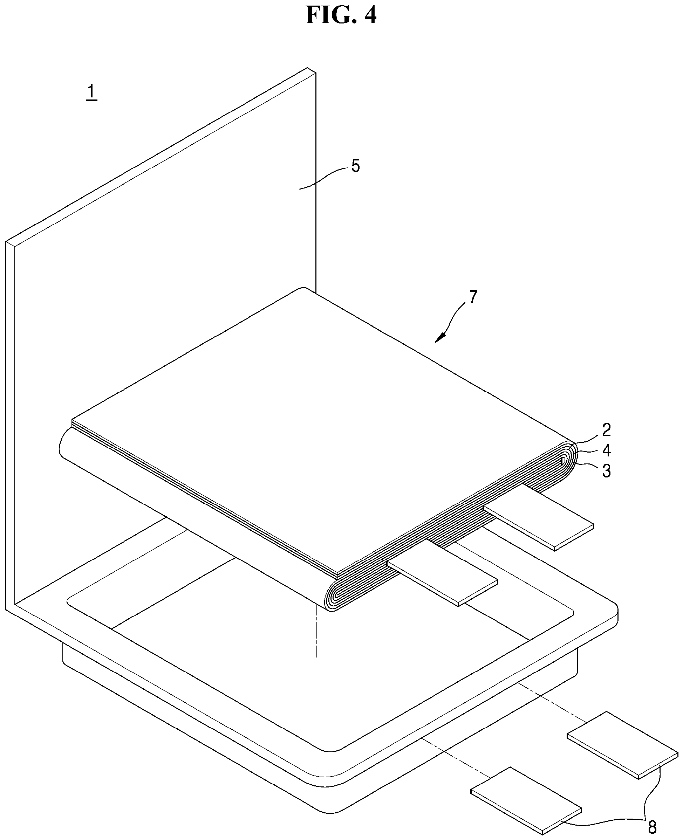

Referring to FIG. 4, a lithium battery 1 according to embodiments may include a cathode 3, an anode 2 described above, and a separator 4. The separator 4 may be disposed between the cathode 3 and the anode 2, and the cathode 3, the anode 2, and the separator 4 may be wound or folded to form a battery structure 7. The formed battery structure 7 may be accommodated in a battery case 5. The lithium battery 1 may include an electrode tab 8 serving as an electrical path for guiding a current generated in the battery structure 7 to the outside. An organic electrolyte may be injected into the battery case 5, and the battery case 5 may be sealed to complete the lithium battery 1. The battery case 5 may have a prismatic shape, but one or more embodiments are not necessarily limited to such a shape. For example, the battery case 5 may have a cylindrical shape, a thin film shape, and/or the like.

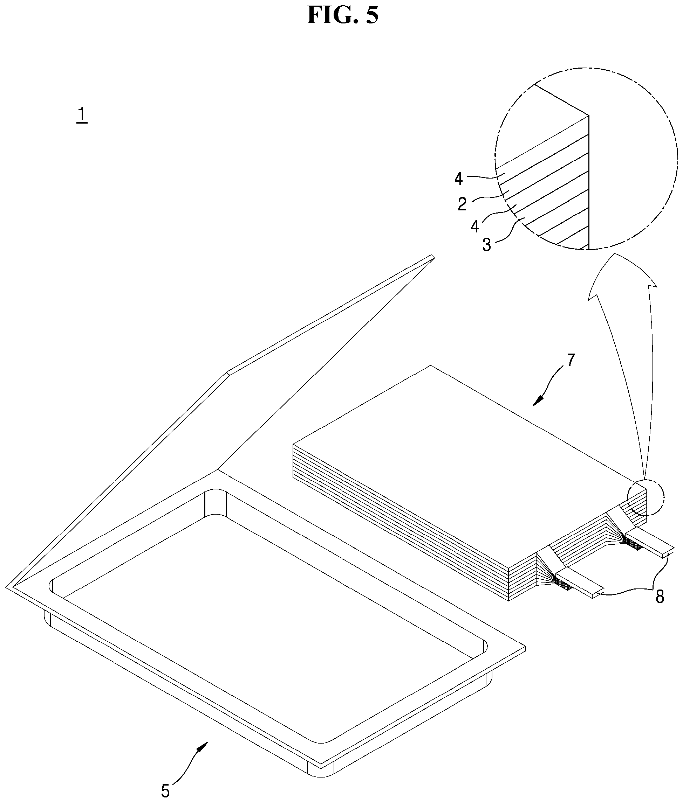

Referring to FIG. 5, a lithium battery 1 according to embodiments may include a cathode 3, an anode 2 described above, and a separator 4. The separator 4 may be disposed between the cathode 3 and the anode 2 to form a battery structure 7. The battery structure 7 may be stacked in a bi-cell structure and then accommodated in a battery case 5. The lithium battery 1 may include an electrode tab 8 serving as an electrical path for guiding a current generated in the battery structure 7 to the outside. An organic electrolyte may be injected into the battery case 5, and the battery case 5 may be sealed to complete the lithium battery 1. The battery case 5 may have a prismatic shape, but one or more embodiments are not necessarily limited to such a shape. For example, the battery case 5 may have a cylindrical shape, a thin film shape, and/or the like.

A pouch-type or kind lithium battery may correspond to a case in which a pouch is utilized as a battery case in each of the lithium batteries of FIGS. 3 to 5. The pouch-type or kind lithium battery may include one or more battery structures. A separator may be disposed between a cathode and an anode to form the battery structure. After the battery structure is stacked in a bi-cell structure, the battery structure may be impregnated in an organic electrolyte, accommodated in a pouch, and sealed to complete the pouch-type or kind lithium battery. For example, in some embodiments, the above-described cathode, anode, and separator may be simply stacked and accommodated in a pouch in the form of an electrode assembly or may be wound or folded into a jelly roll-shaped electrode assembly and then accommodated in a pouch. Subsequently, an organic electrolyte may be injected into the pouch, and the pouch may be sealed to complete a lithium battery.

The lithium battery of the present disclosure may have excellent or suitable discharge capacity and lifespan characteristics and high energy density and thus may be utilized, for example, in electric vehicles (EV). For example, the lithium battery may be utilized in hybrid vehicles such as plug-in hybrid electric vehicles (PHEVs). In some embodiments, the lithium battery may be utilized in fields in which large amounts of power are required to be stored. For example, the lithium battery may be utilized in electric bicycles, power tools, and/or the like.

A plurality of lithium batteries may be stacked to form a battery module, and a plurality of battery modules may form a battery pack. The battery pack may be utilized in all devices requiring high capacity and high output power. For example, the battery pack may be utilized in laptops, smartphones, electric vehicles, and/or the like. A battery module may include, for example, a plurality of batteries and a frame for holding the plurality of batteries. A battery pack may include, for example, a plurality of battery modules and a busbar for connecting the plurality of battery modules. The battery module and/or the battery pack may further include a cooling device. A plurality of battery packs may be adjusted by a battery management system. The battery management system may include a battery pack and a battery controller connected to the battery pack.

A lithium battery including a solid electrolyte will be described in more detail.

### All-solid lithium battery

The lithium battery may be, for example, an all-solid lithium battery including a solid electrolyte. The all-solid lithium battery may include the above-described anode and thus may have improved capacity and excellent or suitable life characteristics at the same time.

For example, the all-solid lithium battery may be manufactured through the following example method, but one or more embodiments are not necessarily limited thereto. A method may be adjusted according to conditions.

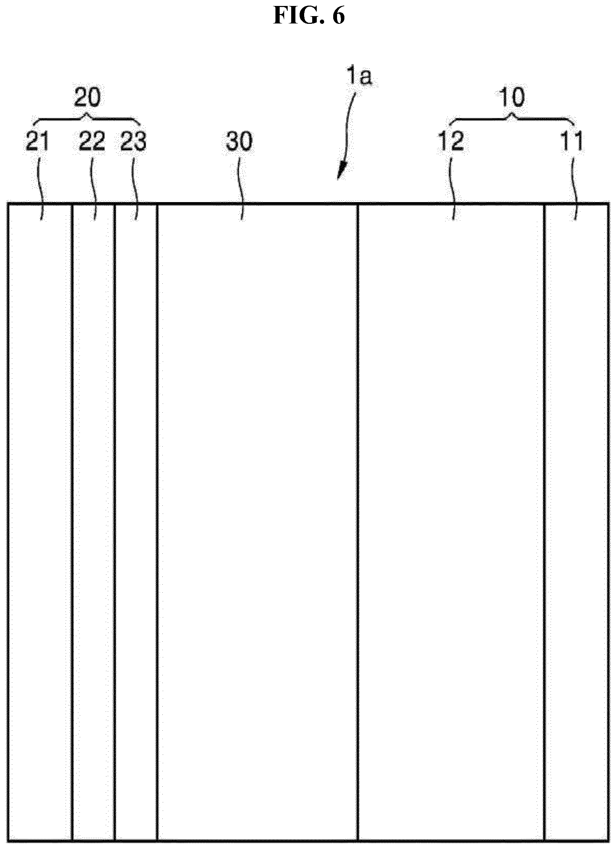

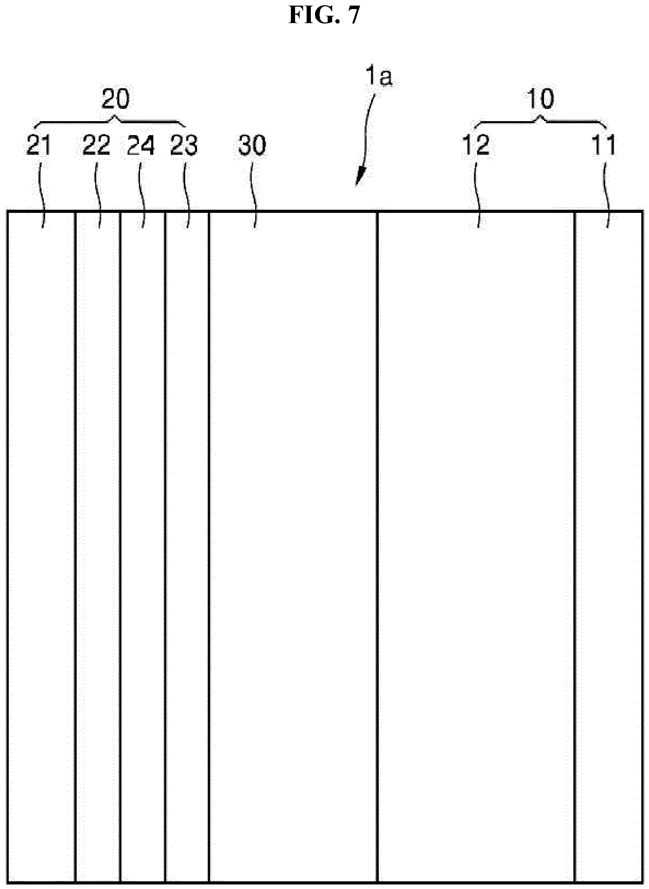

Referring to FIGS. 6 and 7, an all-solid lithium battery 1a may include a cathode 10, the above-described anode 20, and a solid electrolyte layer 30 disposed between the cathode 10 and the anode 20. The solid electrolyte layer 30 may include, for example, an inorganic solid electrolyte. The solid electrolyte layer 30 may include, for example, a sulfide-based solid electrolyte or an oxide-based solid electrolyte.

### Anode

The above-described anode is prepared.

### cathode

Referring to FIGS. 6 and 7, the cathode 10 may include a cathode current collector 11 and a cathode active material layer 12 disposed on the cathode current collector 11. The cathode active material layer 12 may include a cathode active material. The cathode active material may be as defined in part of the lithium battery.

The cathode active material layer 12 may further include a solid electrolyte in addition to the cathode active material. The solid electrolyte included in the cathode 10 may be the same as or different from the solid electrolyte included in the solid electrolyte layer 30. The solid electrolyte included in the cathode 10 may be as defined in the part of the solid electrolyte layer 30. The solid electrolyte (e.g., in a form of particles) utilized in the cathode active material layer 12 may have a D50 average particle diameter less than that of the solid electrolyte utilized in the solid electrolyte layer 30. For example, the D50 average particle diameter of the solid electrolyte utilized in the cathode active material layer 12 may be about 90 % or less, about 80 % or less, about 70 % or less, about 60 % or less, about 50 % or less, about 40 % or less, about 30 % or less, or about 20 % or less of the D50 average particle diameter of the solid electrolyte utilized in the solid electrolyte layer 30. The D50 average particle diameter of the solid electrolyte utilized in the cathode active material layer 12 may be, for example, in a range of about 0.1 µm to about 2 µm, about 0.2 µm to about 1.5 µm, or about 0.3 µm to about 1.0 µm. A content (e.g., amount) of the solid electrolyte included in the cathode active material layer 12 may be in a range of about 1 wt% to about 15 wt%, about 5 wt% to about 15 wt%, or about 8.0 wt% to about 12.0 wt% with respect to the total weight of the cathode active material layer 12.

The cathode active material layer 12 may include a binder. The binder may include, for example, SBR, PTFE, PVDF, PE, and/or the like, but one or more embodiments are not necessarily limited thereto. Any material utilized in the art as a binder may be utilized. A content (e.g., amount) of the binder included in the cathode active material layer 12 may be, for example, in a range of about 0.1 wt% to about 5 wt%, about 0.5 wt% to about 3 wt%, or about 1.0 wt% to about 2.0 wt% with respect to the total weight of the cathode active material layer 12.

The cathode active material layer 12 may include a conductive material. The conductive material may be, for example, a carbon-based conductive material or a metal-based conductive material. The conductive material may include, for example, graphite, CB, AB, KB, carbon fiber, a carbon tube, a metal powder, and/or the like, but one or more embodiments are not necessarily limited thereto. Any material may be utilized as long as the material may be utilized as a conductive material in the art. A content (e.g., amount) of the conductive material included in the cathode active material layer 12 may be, for example, in a range of about 0.1 wt% to about 10 wt%, about 0.5 wt% to about 5 wt%, or about 1.0 wt% to about 4.0 wt% with respect to the total weight of the cathode active material layer 12. In addition to the above-described cathode active material, solid electrolyte, binder, and conductive material, the cathode active material layer 12 may further include, for example, additives such as a filler, a coating agent, a dispersant, and an ion-conductive adjuvant.

The cathode current collector 11 may be formed in the form of a plate, a foil, and/or the like consisting of, for example, aluminum (Al), indium (In), copper (Cu), magnesium (Mg), stainless steel, titanium (Ti), iron (Fe), cobalt (Co), nickel (Ni), zinc (Zn), germanium (Ge), lithium (Li), or an alloy thereof. The cathode current collector 11 may not be provided. The cathode current collector 11 may further include a carbon layer disposed on at least one surface (e.g., one or two (e.g., opposite) surfaces) of a metal substrate. The carbon layer may be additionally disposed on the metal substrate so that a metal of the metal substrate may be prevented or reduced from being corroded by the solid electrolyte included in the cathode 10, and interface resistance between the cathode active material layer 12 and the cathode current collector 11 may be reduced. A thickness of the carbon layer may be, for example, in a range of about 1 µm to about 5 µm, about 1 µm to about 4 µm, or about 1 µm to about 3 µm. If (e.g., when) the carbon layer is excessively thin, it may be difficult to completely block or reduce contact between the metal substrate and the solid electrolyte. If (e.g., when) the carbon layer is excessively thick, the energy density of an all-solid secondary battery may decrease. The carbon layer may include amorphous carbon, crystalline carbon, and/or the like. A thickness of the cathode current collector 11 including the metal substrate and optionally including the carbon layer may be, for example, in a range of about 10 µm to about 50 µm, about 10 µm to about 40 µm, or about 10 µm to about 30 µm, but one or more embodiments are not necessarily limited thereto. The thickness of the cathode current collector 11 may be selected according to the characteristics of an all-solid lithium battery.

In some embodiments, in addition to the cathode current collector 11 and the cathode active material layer 12 disposed on the cathode current collector 11, the cathode 10 may further include an inactive member disposed on at least one side surface (e.g., one side surface) of the cathode active material layer 12. An area of the cathode active material layer 12 may be less than an area of the solid electrolyte layer 30 in contact with the cathode active material layer 12. The inactive member may be disposed to surround the side surface of the cathode active material layer 12 to correct an area error between the cathode active material layer 12 and the solid electrolyte layer 30. The inactive member may be a member that does not include an electrochemically active material, for example, an electrode active material. The electrode active material may be a material that absorbs/desorbs lithium. The inactive member may be a member including (e.g., consisting of) a material utilized in the art other than an electrode active material. The inactive member may surround the side surface of the cathode active material layer 12 and may be in contact with the solid electrolyte layer 30. The inactive member may surround the side surface of the cathode active material layer 112 and may be in contact with the solid electrolyte layer 30, thereby effectively suppressing cracks of the solid electrolyte layer 30, which are caused in a portion of the solid electrolyte layer 30, which is not in contact with the cathode active material layer 12, by a pressure difference during a pressing process. A difference between the area of the cathode active material layer 12 and the area of the solid electrolyte layer 30 may be corrected due to an area of the inactive member, thereby effectively suppressing cracks of the solid electrolyte layer 30 caused by a pressure difference during a pressing process. The inactive member may be disposed between the cathode current collector 11 and the solid electrolyte layer 30 which are opposite to each other. The inactive member may serve as a filler filling a space between the cathode current collector 11 and the solid electrolyte layer 30 which are opposite to each other. The inactive member may include at least one selected from a lithium ion insulator and a lithium ion conductor. The inactive member may be an electron insulator. For example, the inactive member may not be an electron conductor. The inactive member may include an organic material, an inorganic material, or an organic-inorganic composite material. The organic material may be, for example, a polymer. The inorganic material may be, for example, ceramic such as a metal oxide. The organic-inorganic composite material may be a composite of a polymer and a metal oxide. For example, the inactive member may include at least one selected from among an insulating polymer, an ion-conductive polymer, an insulating inorganic material, an oxide-based solid electrolyte, and a sulfide-based solid electrolyte. The inactive member may include, for example, an olefin-based polymer such as PP or PE. The inactive member may be, for example, a gasket. A thickness of the inactive member may be the same as or similar to a thickness of the cathode active material layer 12.

### Solid electrolyte layer

Referring to FIGS. 6 and 7, the solid electrolyte layer 30 may be disposed between the cathode 10 and the anode 20 and may include, for example, a sulfide-based solid electrolyte.

The sulfide-based solid electrolyte may include, for example, at least one selected from among Li₂S-P₂S₅, Li₂S-P₂S₅-LiX, wherein X is a halogen element, Li₂S-P₂S₅-Li₂O, Li₂S-P₂S₅-Li₂O-LiI, Li₂S-SiS₂, Li₂S-SiS₂-LiI, Li₂S-SiS₂-LiBr, Li₂S-SiS₂-LiCl, Li₂S-SiS₂-B₂S₃-LiI, Li₂S-SiS₂-P₂S₅-LiI, Li₂S-B₂S₃, Li₂S-P₂S₅-ZₘSₙ, wherein m and n are each a positive number and Z is one of Ge, Zn, and Ga, Li₂S-GeS₂, Li₂S-SiS₂-Li₃PO₄, Li₂S-SiS₂-LiₚMO_{q}, wherein p and q are each a positive number and M is one of P, Si, Ge, B, Al, Ga, and In, Li₇₋ₓPS₆₋ₓClₓ, wherein 0≤x≤2, Li₇₋ₓPS₆₋ₓBrₓ, wherein 0≤x≤2, and Li₇₋ₓPS₆₋ₓIₓ, wherein 0≤x≤2. For example, the sulfide-based solid electrolyte may be prepared by treating a starting material such as Li₂S or P₂S₅ through melt quenching or mechanical milling. For example, after such treating, heat treatment may be performed. The solid electrolyte may be in an amorphous state, a crystalline state, or a mixture state thereof. In some embodiments, the solid electrolyte may be, for example, a material that includes at least sulfur (S), phosphorus (P), and lithium (Li) as constituent elements among the above-described materials of the sulfide-based solid electrolyte. For example, the solid electrolyte may be a material including Li₂S-P₂S₅. If (e.g., when) a material including Li₂S-P₂S₅ is utilized as a sulfide-based solid electrolyte material for providing a solid electrolyte, a mixing molar ratio of Li₂S to P₂S₅, for example, Li₂S:P₂S₅ may be in a range of about 50:50 to about 90:10.

The sulfide-based solid electrolyte may include, for example, an argyrodite-type or kind (e.g., argyrodite) solid electrolyte represented by Formula 5:

**Formula 5** **Li⁺₁₂₋ₙ₋ₓAⁿ⁺X²⁻₆₋ₓY⁻**ₓ

in Formula 5, A may be P, As, Ge, Ga, Sb, Si, Sn, Al, In, Ti, V, Nb, or Ta, X may be S, Se, or Te, Y may be Cl, Br, I, F, CN, OCN, SCN, or N₃, 1≤n≤5, and 0≤x≤2. The sulfide-based solid electrolyte may be, for example, an argyrodite-type or kind (e.g., argyrodite) compound including at least one selected from among Li₇₋ₓPS₆₋ₓClₓ, wherein 0≤x≤2, Li₇₋ₓPS₆₋ₓBrₓ, wherein 0≤x≤2, and Li₇₋ₓPS₆₋ₓIₓ, wherein 0≤x≤2. The sulfide-based solid electrolyte may be, for example, an argyrodite-type or kind (e.g., argyrodite) compound including at least one selected from among Li₆PS₅Cl, Li₆PS₅Br, and Li₆PS₅I. The argyrodite-type or kind (e.g., argyrodite) solid electrolyte may have a density of about 1.5 g/cc to about 2.0 g/cc. The argyrodite-type or kind (e.g., argyrodite) solid electrolyte may have a density of about 1.5 g/cc or more so that the internal resistance of an all-solid secondary battery may be reduced and Li may be effectively suppressed or reduced from penetrating the solid electrolyte layer 30.

An elastic modulus of the sulfide-based solid electrolyte, for example, a Young's modulus, may be, for example, about 35 GPa or less, about 30 GPa or less, about 27 GPa or less, about 25 GPa or less, or about 23 GPa or less. The elastic modulus of the sulfide-based solid electrolyte, for example, the Young's modulus, may be, for example, in a range of about 10 GPa to about 35 GPa, about 10 GPa to about 30 GPa, about 10 GPa to about 27 GPa, about 10 GPa to about 25 GPa, or about 10 GPa to about 23 GPa. The sulfide-based solid electrolyte may have an elastic modulus in such a range, a magnitude of a temperature and/or pressure required for sintering may be reduced, and thus sintering of the solid electrolyte may be more easily performed.

A D50 average particle diameter of the solid electrolyte (e.g., in a form of particles) utilized in the solid electrolyte layer 30 may be, for example, in a range of about 1 µm to about 10 µm, about 1.5 µm to about 7 µm, or about 2 µm to about 5 µm.

A content (e.g., amount) of the sulfide-based solid electrolyte included in the solid electrolyte layer 30 may be, for example, in a range of about 97 wt% to about 100 wt%, about 98 wt% to about 99.9 wt%, or about 98.5 wt% to about 99.0 wt% with respect to the total weight of the solid electrolyte layer 30.

The solid electrolyte layer 30 may further include, for example, a binder. The binder included in the solid electrolyte layer 30 may include, for example, SBR, PTFE, PVDF, PE, and/or the like, but one or more embodiments are not limited thereto. Any material utilized in the art for a binder may be utilized. The binder of the solid electrolyte layer 30 may be the same as or different from binders included in the cathode active material layer 12 and an electrodeposition induction layer 22.

A content (e.g., amount) of the binder included in the solid electrolyte layer 30 may be, for example, in a range of about 0.1 wt% to about 3 wt%, about 0.5 wt% to about 2 wt%, or about 1.0 wt% to about 2.0 wt% with respect to the total weight of the solid electrolyte layer 30.

Referring to FIGS. 6 and 7, the all-solid lithium battery 1a may include the solid electrolyte layer 30, the cathode 10 disposed on at least one surface (e.g., one surface) of the solid electrolyte layer 30, and the anode 20 disposed on the other surface of the solid electrolyte layer 30. The cathode 10 may include the cathode active material layer 12 in contact with the solid electrolyte layer 30 and the cathode current collector 11 in contact with the cathode active material layer 12, and the anode 20 may include the protective layer 23 in contact with the solid electrolyte layer 30 and an anode current collector 21 in contact with the electrodeposition induction layer 22. In the all-solid lithium battery 1a, for example, the cathode active material layer 12 may be disposed on the cathode current collector 11 to complete the cathode 10. The electrodeposition induction layer 22 may be disposed on the anode current collector layer 21, and the protective layer 23 may be disposed on the electrodeposition induction layer 22 to complete anode 20. The cathode 10 and the anode 20 may be respectively disposed on two surfaces (e.g., opposite surfaces) of the solid electrolyte layer 30 to complete the all-solid lithium battery 1a. In other embodiments, the cathode active material layer 12 may be disposed on the cathode current collector 11 to complete cathode 10. The electrodeposition induction layer 22 may be disposed on the anode current collector layer 21, the protective layer 23 may be disposed on the electrodeposition induction layer 22, and the lithium electrodeposition layer 24 may be disposed between electrodeposition induction layer 22 and the protective layer 23 to complete anode 20. The cathode 10 and the anode 20 may be respectively disposed on two surfaces (e.g., opposite surfaces) of the solid electrolyte layer 30 to complete the all-solid lithium battery 1a.

The present disclosure will be described in more detail through the following Examples and Comparative Examples. However, Examples are for illustrative purposes only, and the scope of the present disclosure is not limited by Examples.

### Example 1: Cu substrate/electrodeposition induction layer containing C-SPAN and Denka black/LiPAA-PAN-PEGMA-containing protective layer Preparation of first carbon-based material

A sulfur powder and a PAN powder were pulverized and mixed and then heat-treated at a temperature of about 350 °C for about 6 hours to prepare SPAN (in a form of particles) having an average particle diameter (D50) of about 0.1 µm and a dark brown color.

The SPAN was carbonized at a temperature of about 850 °C for about 4 hours in a nitrogen atmosphere to prepare a first carbon-based material (c-SPAN) having a black color. A content (e.g., amount) of a nitrogen atom in the prepared first carbon-based material was about 12 wt% with respect to the total weight of the first carbon-based material.

### Preparation of anode

About 0.1 g of the first carbon-based material, about 0.9 g of Denka Black as a second carbon-based material, and about 0.05 g of an acrylic binder as a binder were prepared and then dry-mixed at a rotational speed of about 2,000 rpm for about 5 minutes by utilizing a Thinky mixer to prepare a mixture. A solvent (NMP) was added to the mixture to prepare a slurry. The slurry was applied onto a copper current collector by utilizing a doctor blade and dried in a vacuum oven at a temperature of about 80 °C to prepare an anode. The anode had a structure coated with an electrodeposition induction layer with a thickness of about 10 µm disposed on the copper current collector. A content (e.g., amount) of a nitrogen element included in the electrodeposition induction layer, which was measured through X-ray photoelectron spectroscopy (XPS) analysis, was about 1.2 wt% with respect to the total weight of the electrodeposition induction layer.

After LiPAA-PAN-PEGMA with a viscosity of about 1660 cPs as a binder was dissolved in water (about 8 % aqueous solution), LiPAA-PAN-PEGMA was applied onto the electrodeposition induction layer through a doctor blade method and dried in a vacuum oven at a temperature of about 80 °C to form a protective layer.

### Preparation of cathode

A LiCoO₂ powder and a carbon conductive material (Super-P manufactured by Timcal Ltd.) were uniformly mixed at a weight ratio of about 90:5, and then a PVDF binder solution was added thereto to prepare a slurry for a cathode active material such that a weight ratio of an active material: carbon-based conductive material: binder was about 90:5:5.

The prepared slurry was applied onto an aluminum substrate with a thickness of about 15 µm by utilizing a doctor blade, dried under reduced pressure at a temperature of about 120 °C, and then rolled by utilizing a roll press to prepare a cathode having the form of a sheet.

### Manufacturing of coin cell

A PP separator (Celgard 3510) was disposed between the cathode prepared above and the anode prepared above, and an electrolyte was injected to prepare a coin cell.

As the electrolyte, a solution in which about 1.15 M LiPF₆ was dissolved in EC+ethyl methyl carbonate (EMC)+DMC (volume ratio of about 2:4:4) was utilized.

### Example 2: Cu substrate/C-SPAN-containing electrodeposition induction layer/PVDF-HFP+Al₂O₃-containing protective layer

A coin cell was manufactured in substantially the same manner as in Example 1, except that, instead of LiPAA-PAN-PEGMA, PVDF-HFP was utilized as a binder and about 30 wt% of Al₂O₃ was additionally added to a protective layer with respect to the total content (e.g., amount) of the protective layer.

### Comparative Example 1: Cu substrate/C-SPAN-containing electrodeposition induction layer anode

A coin cell was manufactured in substantially the same manner as in Example 1, except that an anode included only an electrodeposition induction layer and a protective layer was not coated.

### Comparative Example 2: Cu substrate anode

A cathode and a coin cell were manufactured in substantially the same manner as in Example 1, except that an electrodeposition induction layer was not disposed.

### Evaluation Example 1: SEM measurement

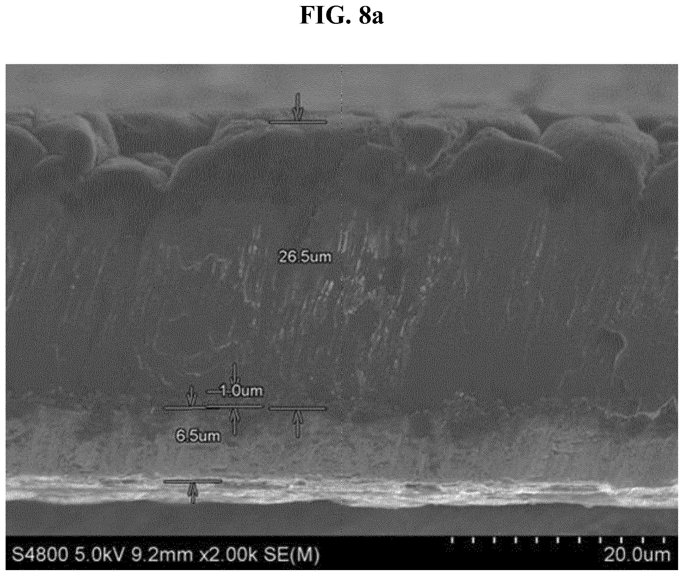

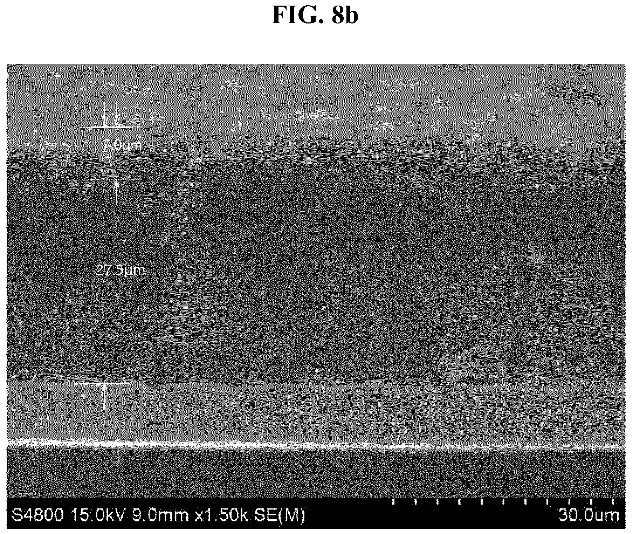

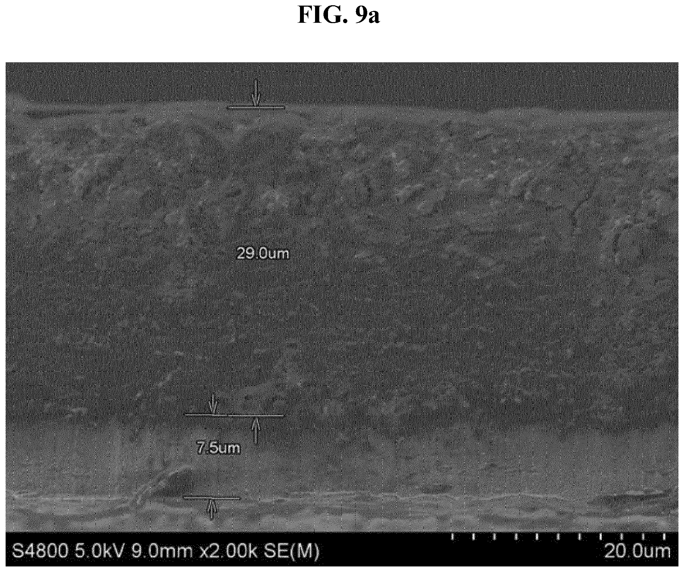

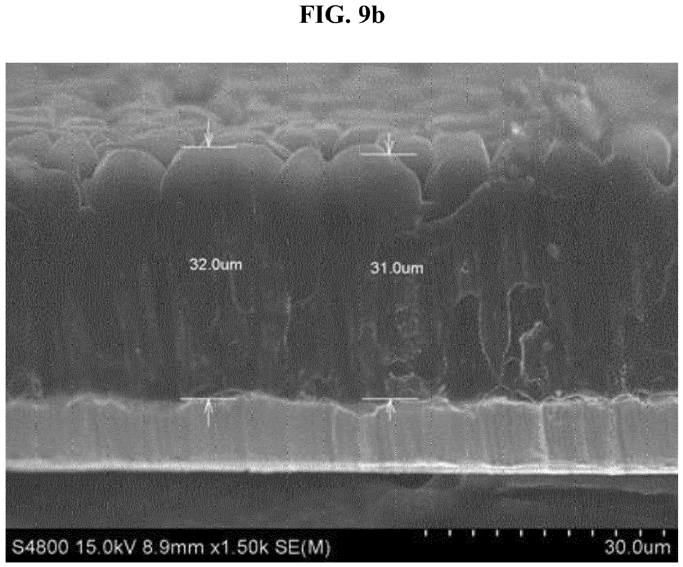

The coin cells manufactured in Example 1, Example 2, Comparative Example 1, and Comparative Example 2 were charged at a constant current rate of about 0.1 C at a temperature of about 25 °C until a voltage reached about 4.2 V (vs. Li) to form a lithium electrodeposition layer between the electrodeposition induction layer and the protective layer. After the lithium electrodeposition layer was formed between the electrodeposition induction layer and the protective layer (at a state of charge of 100% (@SOC 100)), the anodes according to Example 1, Example 2, Comparative Example 1, and Comparative Example 2 were observed by utilizing SEM, respectively, to determine the density and thickness of the lithium electrodeposition layer. Measurement results are shown in Table 1 and FIGS. 8A, 8B, 9A, and 9B.

FIG. 8A is a SEM image of the anode after the lithium electrodeposition layer is formed on the electrodeposition induction layer according to Example 1. FIG. 8B is a SEM image of the anode after the lithium electrodeposition layer is formed on the electrodeposition induction layer according to Example 2. FIG. 9A is a SEM image of the anode after the lithium electrodeposition layer is formed on the electrodeposition induction layer according to Comparative Example 1. FIG. 9B is a SEM image of the anode after the lithium electrodeposition layer is formed on the electrodeposition induction layer according to Comparative Example 2.

**[Table 1]**

| Classification | Anode | Lithium electrodeposition layer | |
|---|---|---|---|
| | | Thickness (µm) | Lithium electrodeposition density |
| Example 1 | Cu foil/C-SPAN+DB/LiPAA-PAN-PEGMA | 26.5 | 0.485 |
| Example 2 | Cu foil/C-SPAN+DB/PVDF-HFP+Al₂O₃ | 27.5 | 0.448 |
| Comparative Example 1 | Cu foil/C-SPAN+DB | 29 | 0.427 |
| Comparative Example 2 | Cu foil | 32 | 0.387 |

Referring to FIGS. 8A, 8B, 9A, and 9B, in lithium batteries of Examples 1 and 2 which included the electrodeposition induction layer including the first carbon-based material and the protective layer, as compared with Comparative Example 1 and Comparative Example 2, the lithium electrodeposition layer included a spherical lithium metal so that lithium ions were uniformly precipitated on the electrodeposition induction layer.

In some embodiments, in the lithium battery according to Example 1, a thickness of the lithium electrodeposition layer was about 26.5 µm in a state in which the remaining capacity was about 100 %, in the lithium battery according to Example 2, a thickness of the lithium electrodeposition layer was about 27.5 µm in a state in which the remaining capacity was about 100 %. Thus, a higher-density lithium electrodeposition layer was formed on the electrodeposition induction layer as compared with Comparative Example 1 in which a thickness of the lithium electrodeposition layer was about 29 µm and Comparative Example 2 in which a thickness of the lithium electrodeposition layer was about 32 µm.

While embodiments have been described in more detail with reference to the accompanying drawings, the present disclosure is not limited to the embodiments. It is obvious to those skilled in the art to which the present disclosure belongs that one or more suitable changes and modifications are conceivable within the scope of the technical idea described in the claims, and those are understood as naturally belonging to the technical scope of the present disclosure.

According to an aspect, by adopting an anode having a novel structure, lithium may be uniformly precipitated to provide a lithium battery having improved cycle characteristics.

In present disclosure, "not include a or any 'component'", "exclude a or any 'component'", "'component'-free", and/or the like refers to that the "component" not being added, selected or utilized as a component in the composition or compound, but the "component" of less than a suitable amount may still be included due to other impurities and/or external factors.

A battery management system (BMS) device, and/or any other relevant devices or components according to embodiments of the present invention described herein may be implemented utilizing any suitable hardware, firmware (e.g. an application-specific integrated circuit), software, or a combination of software, firmware, and hardware. For example, the various components of the device may be formed on one integrated circuit (IC) chip or on separate IC chips. Further, the various components of the device may be implemented on a flexible printed circuit film, a tape carrier package (TCP), a printed circuit board (PCB), or formed on one substrate. Further, the various components of the device may be a process or thread, running on one or more processors, in one or more computing devices, executing computer program instructions and interacting with other system components for performing the various functionalities described herein. The computer program instructions are stored in a memory which may be implemented in a computing device using a standard memory device, such as, for example, a random access memory (RAM). The computer program instructions may also be stored in other non-transitory computer readable media such as, for example, a CD-ROM, flash drive, or the like. Also, a person of skill in the art should recognize that the functionality of various computing devices may be combined or integrated into a single computing device, or the functionality of a particular computing device may be distributed across one or more other computing devices without departing from the scope of the present disclosure.

It should be understood that embodiments described herein should be considered in a descriptive sense only and not for purposes of limitation. Descriptions of features or aspects within each embodiment should typically be considered as available for other similar features or aspects in other embodiments. While one or more embodiments have been described with reference to the drawings, it will be understood by those of ordinary skill in the art that one or more suitable changes in form and details may be made therein without departing from the spirit and scope of the present disclosure as defined by the following claims and equivalents thereof.

## Claims

1. An anode (2) comprising:
an anode current collector (21);
an electrodeposition induction layer (22) on the anode current collector (21) and comprising a first carbon-based material; and
a protective layer (23) on the electrodeposition induction layer (22),
wherein the first carbon-based material is a nitrogen-containing amorphous carbon compound, and
a content of the nitrogen element is more than or equal to about 1 wt% with respect to a total weight of the electrodeposition induction layer (22).

2. The anode (2) as claimed in claim 1, wherein the content of the nitrogen element is in a range of about 1.1 wt% to about 10 wt% with respect to the total weight of the electrodeposition induction layer (22).

3. The anode (2) as claimed in claim 1 or 2, wherein the first carbon-based material is a nitrogen-containing carbonized polymer.

4. The anode (2) as claimed in any of the claims 1 to 3, wherein the polymer comprising the nitrogen element comprises carbonized sulfurized polyacrylonitrile (c-SPAN).

5. The anode (2) as claimed in any of the claims 1 to 4, wherein the first carbon-based material is a nitrogen- and sulfur-containing amorphous carbon compound, wherein preferably the content of the sulfur element in the first carbon-based material is in a range of about 0.1 wt% to about 50 wt%.

6. The anode (2) as claimed in any of the claims 1 to 5, wherein an average particle diameter of the first carbon-based material in a form of particles is in a range of about 100 nm to about 10 µm.

7. The anode (2) as claimed in any of the claims 1 to 6, wherein the electrodeposition induction layer (22) further comprises a second carbon-based material, and the second carbon-based material is a carbon-based conductive material, preferably wherein the second carbon-based material comprises carbon black, Denka black, Ketjen black, carbon nanotubes, carbon nanofibers, carbon nanobelts, fullerene, activated carbon, carbon fibers, or a combination thereof.

8. The anode (2) as claimed in any of the claims 1 to 7, wherein a ratio of a content of the first carbon-based material to a content of the second carbon-based material in the electrodeposition induction layer (22) is in a range of about 1:99 to about 99:1.

9. The anode (2) as claimed in any of the claims 1 to 8, wherein the electrodeposition induction layer (22) further comprises a binder, and
the binder comprises a fluorine-based binder or an acrylic binder.

10. The anode (2) as claimed in any of the claims 1 to 9, wherein the electrodeposition induction layer (22) comprises the binder at a content of about 1 part by weight to about 30 parts by weight with respect to 100 parts by weight of the first carbon-based material.

11. The anode (2) as claimed in any of the claims 1 to 10, wherein a thickness of the electrodeposition induction layer (22) is in a range of about 1 µm to about 50 µm.

12. The anode (2) as claimed in any of the claims 1 to 11, wherein the protective layer (23) comprises a binder comprising at least one selected from among a repeating unit (A) derived from an ethylenically unsaturated monomer comprising a carboxyl group, a repeating unit (B) derived from an ethylenically unsaturated monomer comprising a nitrile group, a repeating unit (C) derived from an ethylenically unsaturated monomer comprising a polyalkylene glycol group, and a repeating unit (D) derived from an ethylenically unsaturated monomer comprising a fluorine group; preferably the binder comprises polyvinylidene fluoride-hexafluoropropylene (PVDF-HFP), lithium polyacrylic acid (LiPAA), polyacrylic acid (PAA), polyacrylonitrile (PAN), polyethylene glycol (PEG) methacrylate (PEGMA), or any combination thereof.

13. The anode (2) as claimed in any of the claims 1 to 12, wherein a thickness of the protective layer (23) is in a range of about 1 µm to about 20 µm.

14. The anode (2) as claimed in any of the claims 1 to 13, further comprising a lithium electrodeposition layer (24) between the electrodeposition induction layer (22) and the protective layer (23), wherein preferably the thickness of the lithium electrodeposition layer (24) is about 50 µm or less.

15. A lithium battery (1) comprising:
a cathode (3);
the anode (2) as claimed in any of the claims 1 to 14; and
an electrolyte between the cathode (3) and the anode (2), wherein preferably the electrolyte is a liquid electrolyte, a gel electrolyte, a solid electrolyte, or a combination thereof.
